# EUROPEAN PATENT APPLICATION

(11) **EP 4 845 283 A1**
(43) Date of publication of application: **25.11.2026**
(21) Application number: 24917863.3
(22) Date of filing: 01.03.2024
(51) Int. Cl.: H04W 74/00, H04W 74/0833, H04W 24/08

(54) **INFORMATION REPORTING METHOD, DEVICE AND STORAGE MEDIUM**

(30) Priority: 19.01.2024 CN 202410080363
(71) Applicant: Beijing Xiaomi Mobile Software Co., Ltd., Beijing 100085 (CN)
(72) Inventor: JIANG, Xiaowei, Beijing 100085 (CN); CHEN, Bo, Beijing 100085 (CN)
(74) Representative: Gunzelmann, Rainer
(86) International application number: PCT/CN2024/079750
(87) International publication number: WO 2025/152245

(57) **Abstract**

The present disclosure relates to an information reporting method, a device and a storage medium. The method comprises: determining second information on the basis of first information, the first information comprising at least one of the following: first configuration information and first downlink signal quality, the first configuration information being used for indicating a random access channel (RACH) configuration, the first downlink signal quality being downlink signal quality measured by a terminal device, the second information being used for a network device to repeatedly send third information, and the third information being used for indicating downlink information the terminal device randomly accesses; and reporting the second information to the network device. That is to say, the terminal device can determine the second information on the basis of the first configuration information indicating the RACH configuration and/or the first downlink signal quality and report same, so that the network device can repeatedly send the third information on the basis of the second information, thereby improving the performance of downlink coverage.

## Description

### CROSS-REFERENCE TO RELATED APPLICATIONS

The present disclosure claims priority to Chinese patent application No. 202410080363.4, filed with the China National Intellectual Property Administration on January 19, 2024, and titled "INFORMATION REPORTING METHOD, DEVICE AND STORAGE MEDIUM," the entire content of which is incorporated herein by reference.

### FIELD

The present disclosure relates to the field of communication technologies, and in particular, to an information reporting method, device and storage medium.

### BACKGROUND

In a non-terrestrial networks (NTN) system, a satellite communication method is used to provide communication services to ground users. Because the satellite is far from the ground, downlink coverage performance is relatively poor. Repeatedly transmitting downlink messages may improve the downlink coverage performance.

### SUMMARY

Embodiments of the present disclosure provide an information reporting method, device and storage medium.

According to a first aspect of embodiments of the present disclosure, an information reporting method is provided, performed by a terminal device, the method including:
determining, according to first information, second information, in which the first information includes at least one of first configuration information or first downlink signal quality, the first configuration information indicates random access channel (RACH) configuration, and the first downlink signal quality is downlink signal quality measured by the terminal device; the second information is used for a network device to repeatedly transmit third information, and the third information indicates downlink information for the terminal device to perform random access; and
reporting the second information to the network device.

According to a second aspect of embodiments of the present disclosure, an information reporting method is provided, performed by a network device, the method including:
receiving second information reported by a terminal device, in which the second information is used for the network device to repeatedly transmit third information, and the third information indicates downlink information for the terminal device to perform random access; the second information is determined by the terminal device according to first information, and the first information includes at least one of first configuration information or first downlink signal quality, the first configuration information indicates random access channel (RACH) configuration, and the first downlink signal quality is downlink signal quality measured by the terminal device.

According to a third aspect of embodiments of the present disclosure, a terminal device is provided, including:
a first processing module configured to determine, according to first information, second information, in which the first information includes at least one of first configuration information or first downlink signal quality, the first configuration information indicates random access channel (RACH) configuration, and the first downlink signal quality is downlink signal quality measured by the terminal device; the second information is used for a network device to repeatedly transmit third information, and the third information indicates downlink information for the terminal device to perform random access; and
a first transceiving module configured to report the second information to the network device.

According to a fourth aspect of embodiments of the present disclosure, a network device is provided, including:
a second transceiving module configured to receive second information reported by a terminal device, in which the second information is used for the network device to repeatedly transmit third information, and the third information indicates downlink information for the terminal device to perform random access; the second information is determined by the terminal device according to first information, and the first information includes at least one of first configuration information or first downlink signal quality, the first configuration information indicates random access channel (RACH) configuration, and the first downlink signal quality is downlink signal quality measured by the terminal device.

According to a fifth aspect of embodiments of the present disclosure, a communication device is provided, including: one or more processors, in which the communication device is configured to perform the optional implementations of the first aspect or the second aspect.

According to a sixth aspect of embodiments of the present disclosure, a communication system is provided, the communication system may include a terminal device and a network device, in which the terminal device is configured to perform the method described in the optional implementations of the first aspect, and the network device is configured to perform the method described in the optional implementations of the second aspect.

According to a seventh aspect of embodiments of the present disclosure, a storage medium is provided, the storage medium stores instructions that, when executed on a communication device, cause the communication device to perform the method described in the optional implementations of the first aspect or the second aspect.

The technical solutions provided by embodiments of the present disclosure may include the following beneficial effects: the terminal device determines the second information according to the first information, in which the first information includes at least one of the first configuration information or the first downlink signal quality, the first configuration information indicates the random access channel (RACH) configuration, and the first downlink signal quality is the downlink signal quality measured by the terminal device; the second information is used for the network device to repeatedly transmit the third information, and the third information indicates the downlink information for the terminal device to perform random access; and reports the second information to the network device. That is, the terminal device may determine and report the second information according to the first configuration information indicating the RACH configuration and/or the first downlink signal quality, and the network device may repeatedly transmit the third information according to the second information, improving downlink coverage performance.

It should be understood that the above general description and the following detailed description are only illustrative and explanatory, and do not limit the present disclosure.

### BRIEF DESCRIPTION OF THE DRAWINGS

In order to more clearly illustrate the technical solutions in embodiments of the present disclosure, the following briefly introduces the drawings required for describing the embodiments. The following drawings are only some embodiments of the present disclosure, and do not specifically limit the protection scope of the present disclosure.
FIG. 1 is a schematic block diagram of a communication system according to an embodiment of the present disclosure.
FIG. 2 is an interaction diagram of an information reporting method according to an embodiment of the present disclosure.
FIG. 3 is an interaction diagram of an information reporting method according to an embodiment of the present disclosure.
FIG. 4 is an interaction diagram of an information reporting method according to an embodiment of the present disclosure.
FIG. 5 is an interaction diagram of an information reporting method according to an embodiment of the present disclosure.
FIG. 6 is an interaction diagram of an information reporting method according to an embodiment of the present disclosure.
FIG. 7 is an interaction diagram of an information reporting method according to an embodiment of the present disclosure.
FIG. 8 is an interaction diagram of an information reporting method according to an embodiment of the present disclosure.
FIG. 9 is a schematic flowchart of an information reporting method according to an embodiment of the present disclosure.
FIG. 10 is a schematic flowchart of an information reporting method according to an embodiment of the present disclosure.
FIG. 11 is a schematic flowchart of an information reporting method according to an embodiment of the present disclosure.
FIG. 12 is a schematic flowchart of an information reporting method according to an embodiment of the present disclosure.
FIG. 13 is a schematic flowchart of an information reporting method according to an embodiment of the present disclosure.
FIG. 14 is a schematic flowchart of an information reporting method according to an embodiment of the present disclosure.
FIG. 15 is a schematic flowchart of an information reporting method according to an embodiment of the present disclosure.
FIG. 16 is a schematic flowchart of an information reporting method according to an embodiment of the present disclosure.
FIG. 17 is an interaction diagram of an information reporting method according to an embodiment of the present disclosure.
FIG. 18 is a schematic block diagram of a terminal device according to an embodiment of the present disclosure.
FIG. 19 is a schematic block diagram of a network device according to an embodiment of the present disclosure.
FIG. 20 is a schematic block diagram of a communication device according to an embodiment of the present disclosure.
FIG. 21 is a schematic block diagram of a chip according to an embodiment of the present disclosure.

### DETAILED DESCRIPTION

Embodiments of the present disclosure provide an information reporting method, device and storage medium.

In a first aspect, embodiments of the present disclosure provide an information reporting method, performed by a terminal device, the method including:
determining, according to first information, second information, in which the first information includes at least one of first configuration information or first downlink signal quality, the first configuration information indicates random access channel (RACH) configuration, and the first downlink signal quality is downlink signal quality measured by the terminal device; the second information is used for a network device to repeatedly transmit third information, and the third information indicates downlink information for the terminal device to perform random access; and
reporting the second information to the network device.

In the above embodiments, the terminal device may determine and report the second information according to the first configuration information indicating the RACH configuration and/or the first downlink signal quality, and the network device may repeatedly transmit the third information according to the second information, improving downlink coverage performance.

In conjunction with some embodiments of the first aspect, in some embodiments, the method further includes:
determining to report the second information.

In the above embodiments, the terminal device reports the second information to the network device when determining that the second information needs to be reported, avoiding resource waste.

In conjunction with some embodiments of the first aspect, in some embodiments, determining to report the second information includes at least one of:
determining to report the second information according to the first configuration information; or
determining to report the first information according to the first downlink signal quality.

In the above embodiments, whether to report the second information may be determined according to at least one of the first configuration information or the first downlink signal quality, improving the flexibility of reporting the second information.

In conjunction with some embodiments of the first aspect, in some embodiments, determining to report the second information according to the first configuration information includes at least one of:
in a case where it is determined that the first configuration information includes a contention-free random access (CFRA) resource for the terminal device to perform random access, and the CFRA resource includes a first RACH resource supporting reporting of the second information and includes no RACH resource other than the first RACH resource, determining to report the second information;
in a case where it is determined that a random access request transmitted by the terminal device is triggered based on system information (SI), and a RACH resource used for transmitting the SI includes the first RACH resource and includes no RACH resource other than the first RACH resource, determining to report the second information; or
in a case where it is determined that a bandwidth part (BWP) for a random access request transmitted by the terminal device includes the first RACH resource and includes no RACH resource other than the first RACH resource, determining to report the second information.

In the above embodiments, the terminal device may determine whether to report the second information according to the configuration of the RACH resources.

In conjunction with some embodiments of the first aspect, in some embodiments, the first information includes the first downlink signal quality, and determining, according to the first information, the second information includes:
determining at least one first reporting value according to the first downlink signal quality; and
determining the second information according to the at least one first reporting value.

In the above embodiments, the terminal device may determine the second information according to the first downlink signal quality, and the network device may repeatedly transmit the third information with reference to the downlink signal quality, improving downlink coverage while avoiding resource waste.

In conjunction with some embodiments of the first aspect, in some embodiments, determining the at least one first reporting value according to the first downlink signal quality includes:
determining a first mapping value according to the first downlink signal quality and a first association relationship, in which the first association relationship includes a correspondence between different downlink signal qualities and mapping values; and
determining the at least one first reporting value according to the first mapping value and a second mapping value supported by the network device.

In the above embodiments, the terminal device may determine the first reporting value through a pre-defined first association relationship, improving the accuracy of the first reporting value.

In conjunction with some embodiments of the first aspect, in some embodiments, determining the at least one first reporting value according to the first mapping value and the second mapping value supported by the network device includes one of:
taking a second mapping value, among one or more the second mapping values, greater than or equal to the first mapping value as the first reporting value; or
taking a second mapping value, among one or more second mapping values, less than or equal to the first mapping value as the first reporting value.

In the above embodiments, the terminal device may determine the first reporting value according to different conditions, making the determination approach of the first reporting value more flexible.

In conjunction with some embodiments of the first aspect, in some embodiments, determining the at least one first reporting value according to the first downlink signal quality includes:
determining third downlink signal quality according to the first downlink signal quality and second downlink signal quality, in which the second downlink signal quality is a downlink signal quality threshold corresponding to a first repetition number, and the first repetition number is a repetition number supported by the network device; and
taking a repetition number corresponding to the third downlink signal quality as the first reporting value.

In the above embodiments, the terminal device uses the repetition number determined according to the downlink signal quality as the first reporting value, and the network device may repeatedly transmit the third information according to the repetition number, improving the reliability of transmitting the third information.

In conjunction with some embodiments of the first aspect, in some embodiments, determining the third downlink signal quality according to the first downlink signal quality and the second downlink signal quality includes one of:
taking second downlink signal quality, among the one or more second downlink signal qualities, greater than or equal to the first downlink signal quality as the third downlink signal quality; or
taking second downlink signal quality, among the one or more second downlink signal qualities, less than or equal to the first downlink signal quality as the third downlink signal quality.

In the above embodiments, the terminal device may determine the third downlink signal quality according to different conditions, making the determination approach of the third downlink signal quality more flexible.

In conjunction with some embodiments of the first aspect, in some embodiments, determining the second information according to the at least one first reporting value includes:
taking a first reporting value corresponding to a RACH resource set used for transmitting a preamble among the at least one first reporting value as the second information.

In the above embodiments, the terminal device uses the first reporting value corresponding to the RACH resource set used for transmitting the preamble as the second information.

In conjunction with some embodiments of the first aspect, in some embodiments, the first information includes the first configuration information, the first configuration information includes a plurality of RACH resource sets, and determining, according to the first information, the second information includes:
determining a first RACH resource set capable of being used for triggering all features for the terminal device to perform random access, in which the first RACH resource set includes at least one RACH resource set from the first configuration information; and
determining the second information according to fourth information corresponding to the first RACH resource set, in which the fourth information includes at least one of reference signal received power (RSRP), channel quality indicator (CQI), or a repetition number.

In the above embodiments, the terminal device may determine the second information based on the RACH resources. In this way, the problem that the terminal device cannot select a suitable RACH resource may be avoided, and downlink coverage performance is improved.

In conjunction with some embodiments of the first aspect, in some embodiments, determining the second information according to the fourth information corresponding to the first RACH resource set includes:
in a case where it is determined that the first RACH resource set includes one RACH resource set, taking the fourth information corresponding to the first RACH resource set as the second information.

In the above embodiments, in a case where the first RACH resource set includes one RACH resource set, the fourth information corresponding to the first RACH resource set may be reported to the network device as the second information, ensuring that the terminal device may select a RACH resource for random access.

In conjunction with some embodiments of the first aspect, in some embodiments, determining the second information according to the fourth information corresponding to the first RACH resource set includes:
in a case where it is determined that the first RACH resource set includes a plurality of RACH resource sets, determining at least one second RACH resource set from the first RACH resource set according to the first downlink signal quality; and
determining the second information according to fourth information corresponding to the at least one second RACH resource set.

In the above embodiments, in a case where the first RACH resource set includes a plurality of RACH resource sets, the terminal device may determine the second RACH resource set from the plurality of RACH resource sets according to the first downlink signal quality, and use the fourth information corresponding to the second RACH resource set as the second information, making the determined second information more accurate.

In conjunction with some embodiments of the first aspect, in some embodiments, determining the at least one second RACH resource set from the first RACH resource set according to the first downlink signal quality includes:
determining at least one first reporting value according to the first downlink signal quality;
determining a second reporting value corresponding to each RACH resource set in the first RACH resource set; and
taking a RACH resource set corresponding to a second reporting value falling within the at least one first reporting value among a plurality of second reporting values as the second RACH resource set.

In the above embodiments, the second RACH resource set is determined in conjunction with the first downlink signal quality and the first RACH resource set, making the determined second RACH resource set more accurate.

In conjunction with some embodiments of the first aspect, in some embodiments, determining the second information according to the fourth information corresponding to the at least one second RACH resource set includes one of:
taking a minimum value among the fourth information corresponding to the at least one second RACH resource set as the second information; or
taking a maximum value among the fourth information corresponding to the at least one second RACH resource set as the second information.

In the above embodiments, the second information may be determined according to different conditions, making the determination approach of the second information more flexible.

In conjunction with some embodiments of the first aspect, in some embodiments, the method further includes:
in a case where it is determined that none of the plurality of second reporting values falls within the at least one first reporting value, determining the second information according to the plurality of second reporting values and the at least one first reporting value.

In the above embodiments, in a case where the first reporting value determined according to the first downlink signal quality does not include the second reporting value corresponding to the first RACH resource set, the second information may be determined in conjunction with the first reporting value determined according to the first downlink signal quality and the second reporting value, making the determined second information more accurate.

In conjunction with some embodiments of the first aspect, in some embodiments, determining the second information according to the plurality of second reporting values and the at least one first reporting value includes at least one of:
taking a minimum value among one or more third reporting values as the second information, in which the one or more third reporting values include a second reporting value, among the plurality of second reporting values, greater than a fourth reporting value, and the fourth reporting value is a maximum value among the at least one first reporting value; or
taking a maximum value among one or more fifth reporting values as the second information, in which the one or more fifth reporting values include a second reporting value, among the plurality of second reporting values, less than a sixth reporting value, and the sixth reporting value is a minimum value among the at least one first reporting value.

In the above embodiments, the second information may be determined according to multiple conditions, making the approach for determining the second information more flexible.

In conjunction with some embodiments of the first aspect, in some embodiments, the method further includes:
in a case where it is determined that all of the plurality of second reporting values are less than the fourth reporting value, taking the maximum value among the one or more fifth reporting values as the second information.

In the above embodiments, the second information may be preferentially determined according to the fourth reporting value.

In conjunction with some embodiments of the first aspect, in some embodiments, the method further includes:
in a case where it is determined that all of the plurality of second reporting values are greater than the sixth reporting value, taking the minimum value among the one or more third reporting values as the second information.

In the above embodiments, the second information may be preferentially determined according to the sixth reporting value.

In conjunction with some embodiments of the first aspect, in some embodiments, the method further includes:
in a case where it is determined that the plurality of RACH resource sets in the first configuration information are all fifth RACH resource sets, and the fifth RACH resource sets are capable of being used for triggering a part of features for the terminal device to perform random access, and not capable of being used for triggering all features for the terminal device to perform random access; determining a sixth RACH resource set from the fifth RACH resource sets according to priority of the part of features; and
determining the second information according to fourth information corresponding to the sixth RACH resource set.

In the above embodiments, in a case where the fifth RACH resource sets may only be used for triggering a part of the features for the terminal device to perform random access, the second information may be determined according to the priority of the part of features.

In conjunction with some embodiments of the first aspect, in some embodiments, determining the second information according to the fourth information corresponding to the sixth RACH resource set includes:
in a case where it is determined that the sixth RACH resource set includes one seventh RACH resource set, taking fourth information corresponding to the seventh RACH resource set as the second information, in which the seventh RACH resource set is a RACH resource set supporting reporting of the second information; or
in a case where it is determined that the sixth RACH resource set includes a plurality of seventh RACH resource sets, determining at least one eighth RACH resource set from the plurality of seventh RACH resource sets according to the first downlink signal quality, and determining the second information according to fourth information corresponding to the at least one eighth RACH resource set.

In the above embodiments, the approach for determining the second information may be selected according to the number of RACH resource sets included in the sixth RACH resource set, improving the accuracy of the second information.

In conjunction with some embodiments of the first aspect, in some embodiments, the first downlink signal quality includes at least one of RSRP of a downlink pathloss reference point, CQI of a downlink pathloss reference point, RSRP of a physical downlink control channel (PDCCH), or CQI of a PDCCH.

In the above embodiments, the first downlink signal quality may include multiple types, making the selection approach of the first downlink signal quality more flexible.

In conjunction with some embodiments of the first aspect, in some embodiments, the second information includes at least one of:
the first downlink signal quality;
a repetition number; or
an indication of whether the terminal device supports repeatedly transmitting the downlink information.

In the above embodiments, the second information may include multiple types, and the network device may more accurately repeatedly transmit the third information.

In conjunction with some embodiments of the first aspect, in some embodiments, the downlink information includes at least one of contention-based random access response information Msg2, contention resolution information Msg4, or non-contention-based random access response information MsgB.

In the above embodiments, the downlink information may include multiple types, and the network device may repeatedly transmit more information, further improving downlink coverage performance.

In conjunction with some embodiments of the first aspect, in some embodiments, a bearing mode of the downlink information includes at least one of:
a PDCCH; or
a physical downlink shared channel (PDSCH).

In the above embodiments, the bearing mode of the downlink information may include multiple types, and the network device may repeatedly transmit more third information, further improving downlink coverage performance.

In conjunction with some embodiments of the first aspect, in some embodiments, reporting the second information to the network device includes: reporting the second information to the network device via contention-based random access request information Msg1 or non-contention-based random access request information MsgA.

In the above embodiments, the second information may be sent to the network device through different messages, improving the flexibility of the second information sending approach.

In a second aspect, embodiments of the present disclosure provide an information reporting method, performed by a network device, the method including:
receiving second information reported by a terminal device, in which the second information is used for the network device to repeatedly transmit third information, and the third information indicates downlink information for the terminal device to perform random access; the second information is determined by the terminal device according to first information, and the first information includes at least one of first configuration information or first downlink signal quality, the first configuration information indicates random access channel (RACH) configuration, and the first downlink signal quality is downlink signal quality measured by the terminal device.

In conjunction with some embodiments of the second aspect, in some embodiments, the first downlink signal quality includes at least one of reference signal received power (RSRP) of a downlink pathloss reference point, channel quality indicator (CQI) of a downlink pathloss reference point, RSRP of a physical downlink control channel (PDCCH), or CQI of a PDCCH.

In conjunction with some embodiments of the second aspect, in some embodiments, the second information includes at least one of:
the first downlink signal quality;
a repetition number; or
an indication of whether the terminal device supports repeatedly transmitting the downlink information.

In conjunction with some embodiments of the second aspect, in some embodiments, the downlink information includes at least one of contention-based random access response information Msg2, contention resolution information Msg4, or non-contention-based random access response information MsgB.

In conjunction with some embodiments of the second aspect, in some embodiments, a bearing mode of the downlink information includes at least one of:
a PDCCH; or
a physical downlink shared channel (PDSCH).

In conjunction with some embodiments of the second aspect, in some embodiments, receiving the second information reported by the terminal device includes:
receiving the second information reported by the terminal device via Msg1 or MsgA.

In a third aspect, embodiments of the present disclosure provide an information reporting method, the method including:
determining, by a terminal device, second information according to first information, in which the first information includes at least one of first configuration information or first downlink signal quality, the first configuration information indicates random access channel (RACH) configuration, and the first downlink signal quality is downlink signal quality measured by the terminal device; the second information is used for a network device to repeatedly transmit third information, and the third information indicates downlink information for the terminal device to perform random access; and
reporting, by the terminal device, the second information to the network device.

In a fourth aspect, embodiments of the present disclosure provide a terminal device, the terminal device may include at least one of a first transceiving module or a first processing module, in which the terminal device may be configured to perform the optional implementations of the first aspect.

In a fifth aspect, embodiments of the present disclosure provide a network device, the network device may include at least one of a second transceiving module or a second processing module, in which the network device may be configured to perform the optional implementations of the second aspect.

In a sixth aspect, embodiments of the present disclosure provide a terminal device, and the terminal device may include one or more processors, in which the terminal device may be configured to perform the optional implementations of the first aspect.

In a seventh aspect, embodiments of the present disclosure provide a network device, and the network device may include one or more processors, in which the network device may be configured to perform the optional implementations of the second aspect.

In an eighth aspect, embodiments of the present disclosure provide a communication device, and the communication device may include one or more processors, in which the communication device may be configured to perform the optional implementations of the first aspect or the second aspect.

In a ninth aspect, embodiments of the present disclosure provide a communication system, and the communication system may include a terminal device and a network device, in which the terminal device is configured to perform the method described in the optional implementations of the first aspect, and the network device is configured to perform the method described in the optional implementations of the second aspect.

In a tenth aspect, embodiments of the present disclosure provide a storage medium, and the storage medium stores instructions that, when executed on a communication device, cause the communication device to perform the method described in the optional implementations of the first aspect or the second aspect.

In an eleventh aspect, embodiments of the present disclosure provide a program product that, when executed by a communication device, causes the communication device to perform the method described in the optional implementations of the first aspect or the second aspect.

In a twelfth aspect, embodiments of the present disclosure provide a computer program that, when executed on a computer, causes the computer to perform the method described in the optional implementations of the first aspect or the second aspect.

In a thirteenth aspect, embodiments of the present disclosure provide a chip or a chip system. The chip or chip system includes a processing circuit configured to perform the method described in the optional implementations of the first aspect or the second aspect.

It may be understood that the above terminal device, network device, communication device, communication system, storage medium, program product, computer program, chip or chip system may all be configured to perform the methods proposed in embodiments of the present disclosure. Therefore, for the beneficial effects that may be achieved, reference may be made to the beneficial effects in the corresponding methods, and details are not repeated here.

Embodiments of the present disclosure provide an information reporting method, device and storage medium. In some embodiments, terms such as information reporting method, information transmission method, communication method, etc. may be interchanged; terms such as information reporting apparatus, information transmission apparatus, communication apparatus, communication device, etc. may be interchanged; terms such as information reporting system, communication system, etc. may be interchanged.

Embodiments of the present disclosure are not exhaustive, and are only illustrations of some embodiments, and do not specifically limit the protection scope of the present disclosure. In the absence of conflict, each step in a certain embodiment may be implemented as an independent embodiment, and the steps may be combined arbitrarily. For example, a solution after removing some steps in a certain embodiment may also be implemented as an independent embodiment, and the order of the steps in a certain embodiment may be exchanged arbitrarily. In addition, optional implementations in a certain embodiment may be combined arbitrarily; furthermore, embodiments may be combined arbitrarily. For example, some or all steps of different embodiments may be combined arbitrarily, and a certain embodiment may be combined with optional implementations of other embodiments arbitrarily.

In each embodiment of the present disclosure, unless otherwise specified and there is a logical conflict, the terms and/or descriptions between the embodiments are consistent and may be referenced to each other, and the technical features in different embodiments may be combined to form new embodiments according to their inherent logical relationships.

The terms used in embodiments of the present disclosure are only for the purpose of describing specific embodiments, and are not intended to limit the present disclosure.

In embodiments of the present disclosure, unless otherwise stated, elements expressed in singular form, such as "a," "an," "the," "above," "said," "aforementioned," "this," etc., may mean "one and only one," and may also mean "one or more," "at least one," etc. For example, when articles such as "a," "an," "the" in English are used in translation, the noun after the article may be understood as a singular expression or a plural expression.

In some embodiments, "plurality" may mean two or more than two.

In some embodiments, terms such as "at least one of," "one or more of," "a plurality of," "multiple," etc. may be interchanged.

In some embodiments, descriptions such as "at least one of A or B," "A and/or B," "in one case A, in another case B," "in response to one case A, in response to another case B," etc., may include the following technical solutions according to the situation: in some embodiments A (A is performed independently of B); in some embodiments B (B is performed independently of A); in some embodiments selection and execution from A and B (A and B are selectively executed); in some embodiments A and B (both A and B are executed). The same applies when there are more branches such as A, B, C, etc.

In some embodiments, descriptions such as "A or B," etc., may include the following technical solutions according to the situation: in some embodiments A (A is performed independently of B); in some embodiments B (B is performed independently of A); in some embodiments selection and execution from A and B (A and B are selectively executed). The same applies when there are more branches such as A, B, C, etc.

Prefix words such as "first," "second," etc., in embodiments of the present disclosure are only used to distinguish different description objects, and do not constitute a limitation on the position, order, priority, quantity, or content of the description objects. The description of the description objects refers to the claims or the context in the embodiments, and should not be considered as an unnecessary limitation due to the use of prefix words. For example, if the description object is "field," the ordinal numbers before "field" in "first field" and "second field" do not limit the position or order between the "fields," and "first" and "second" do not limit whether the "fields" they modify are in the same message, nor do they limit the order of the "first field" and "second field." For another example, if the description object is "level," the ordinal numbers before "level" in "first level" and "second level" do not limit the priority between the "levels." For another example, the number of description objects is not limited by ordinal numbers, and may be one or more. Taking "first device" as an example, the number of "devices" may be one or more. In addition, objects modified by different prefix words may be the same or different. For example, if the description object is "device," the "first device" and "second device" may be the same device or different devices, and their types may be the same or different; for another example, if the description object is "information," the "first information" and "second information" may be the same information or different information, and their content may be the same or different.

In some embodiments, "include A," "contain A," "used for indicating A," "carry A" may be interpreted as directly carrying A, or indirectly indicating A.

In some embodiments, terms such as "in response to," "in response to determining," "in the case of," "at the time of," "when," "if," etc., may be interchanged.

In some embodiments, terms such as "greater than," "greater than or equal to," "not smaller than," "more than," "more than or equal to," "not less than," "higher than," "higher than or equal to," "not lower than," "above," etc. may be interchanged, and terms such as "smaller than," "smaller than or equal to," "not greater than," "less than," "less than or equal to," "not more than," "lower than," "lower than or equal to," "not higher than," "below," etc. may be interchanged.

In some embodiments, apparatuses, etc. may be interpreted as physical entities or virtual entities, and their names are not limited to the names recorded in the embodiments. Terms such as "apparatus," "equipment," "device," "circuit," "network element," "node," "function," "unit," "section," "system," "network," "chip," "chip system," "entity," "subject," etc. may be interchanged.

In some embodiments, "network" may be interpreted as an apparatus included in the network (e.g., access network device, core network device, etc.).

In some embodiments, terms such as "access network device, AN Device," "radio access network device, RAN Device," "base station, BS," "radio base station," "fixed station," "node," "access point," "transmission point, TP," "reception point, RP," "transmission / reception point, TRP," "panel," "antenna panel," "antenna array," "cell," "macro cell," "small cell," "femto cell," "pico cell," "sector," "cell group," "serving cell," "carrier," "component carrier," "bandwidth part, BWP," etc. may be interchanged.

In some embodiments, terms such as "terminal," "terminal device," "user equipment, ue," "user terminal," "mobile station, MS," "mobile terminal, MT," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," etc. may be interchanged.

In some embodiments, an access network device, a core network device, or a network device may be replaced with a terminal. For example, embodiments of the present disclosure may also be applied to structures in which communication between an access network device, a core network device, or a network device and a terminal is replaced with communication between multiple terminals (e.g., device-to-device, D2D, vehicle-to-everything, V2X, etc.). In this case, the terminal may also have a structure having all or part of the functions of the access network device. In addition, terms such as "uplink," "downlink," etc. may also be replaced with terms corresponding to communication between terminals (e.g., "side"). For example, uplink channels, downlink channels, etc., may be replaced with side channels or direct channels, and uplink links, downlink links, etc., may be replaced with side links or direct links.

In some embodiments, a terminal may be replaced with an access network device, a core network device, or a network device. In this case, the access network device, the core network device, or the network device may also have a structure having all or part of the functions of the terminal.

In some embodiments, obtaining data, information, etc. may comply with the laws and regulations of the country where it is located.

In some embodiments, data, information, etc. may be obtained after obtaining user consent.

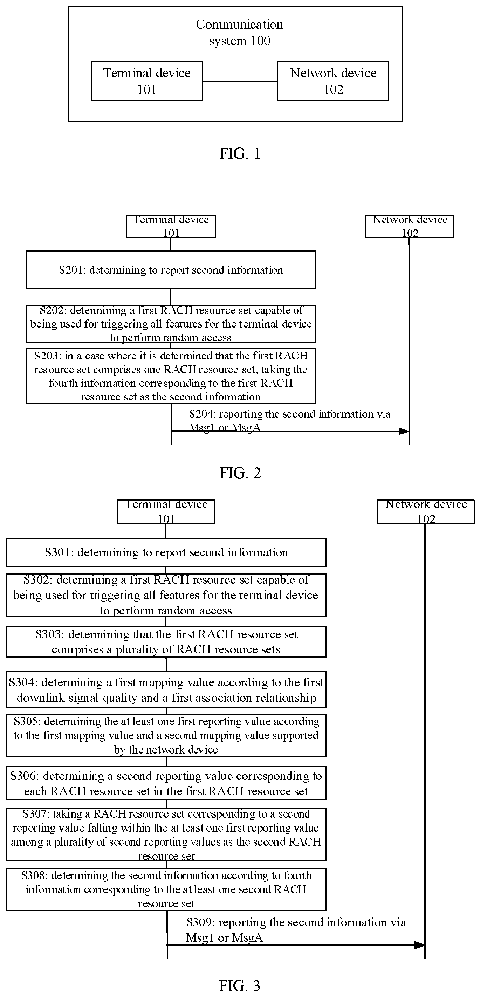

FIG. 1 is a schematic block diagram of a communication system according to an embodiment of the present disclosure. As shown in FIG. 1, the communication system 100 may include a terminal device 101 and a network device 102.

In some embodiments, the terminal device 101 may include at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc., but is not limited to this.

In some embodiments, the network device 102 may include at least one of an access network device or a core network device.

In some embodiments, an access network device may be a node or device that accesses a terminal device to a wireless network. The access network device may include at least one of an evolved NodeB (eNB) in a 5G communication system, a next generation eNB (ng-eNB), a next generation NodeB (gNB), a Node B (NB), a home Node B (HNB), a home evolved NodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, an access node in a Wi-Fi system, etc., but is not limited to this.

In some embodiments, the technical solution of the present disclosure may be applicable to an open RAN architecture. In this case, the interfaces between or within the access network devices referred to in embodiments of the present disclosure may become internal interfaces of the open RAN, and the processes and information exchange between these internal interfaces may be implemented through software or programs.

In some embodiments, an access network device may be composed of a central unit (CU) and a distributed unit (DU), where the CU may also be called a control unit. Using the CU-DU structure, the protocol layers of the access network device may be split, the functions of some protocol layers are placed in the CU for centralized control, and the functions of the remaining part or all of the protocol layers are distributed in the DUs, with the CU centrally controlling the DUs, but is not limited to this.

In some embodiments, a core network device may be one device, or multiple devices or a group of devices. The core network may include at least one of an evolved packet core (EPC), a 5G core network (5GCN), or a next generation core (NGC).

It may be understood that the communication system described in embodiments of the present disclosure is intended to more clearly illustrate the technical solutions of embodiments of the present disclosure, and does not constitute a limitation on the technical solutions proposed in embodiments of the present disclosure. Those of ordinary skill in the art will understand that, with the evolution of system architecture and the emergence of new business scenarios, the technical solutions proposed in embodiments of the present disclosure are equally applicable to similar technical problems.

The following embodiments of the present disclosure may be applied to the communication system 100 shown in FIG. 1, or some entities thereof, but are not limited to this. The entities shown in FIG. 1 are examples. The communication system may include all or some of the entities in FIG. 1, and may also include other entities not shown in FIG. 1. The number and form of each entity are arbitrary, and each entity may be physical or virtual. The connection relationships between the entities are examples, and the entities may be not connected or connected, and the connection may be in any manner, and may be direct or indirect, wired or wireless.

Various embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, internet of things (IoT) system, vehicle-to-everything (V2X), other communication methods, next-generation systems based on them, etc. In addition, multiple systems may be combined (e.g., LTE or LTE-A combined with 5G, etc.).

In some embodiments of the present disclosure, in order to improve the downlink coverage of Msg2/Msg4/MsgB, the downlink coverage performance may be improved by means of Msg2/Msg4/MsgB repetition. In order to facilitate the network device to determine the repetition number of Msg2/Msg4/MsgB, the terminal device needs to report auxiliary information to assist the network device in determining the repetition number. The auxiliary information may be one or more of the following:
downlink signal quality, such as channel quality indicator (CQI) or downlink reference point reference signal received power (RSRP);
a suggested repetition number; or
an indication of whether the terminal device supports Msg2/Msg4/MsgB repetition.

In some embodiments, NR supports configuring different physical random access channel (PRACH) resources for different feature combinations. Features may include at least one of:
Msg3 repetition;
Msg1 repetition;
reduced capability (RedCap);
small data; or
network slice AS group (NSAG): slice.

In some embodiments, during a random access procedure, after a random access attempt fails, the terminal device needs to perform another random access attempt until the maximum number of random access attempts is reached. The terminal device may switch between contention-based random access (CBRA) and contention-free random access (CFRA), or switch from 2-STEP RA to 4-step RA, or change the Msg1 repetition number during different random access attempts.

In some embodiments, for the random access channel (RACH) procedure of Msg2/Msg4/MsgB repetition, the network device configures different RACH resources for different repetition/RSRP thresholds/CQI thresholds. If the terminal device selects only the RACH resource corresponding to one repetition/RSRP threshold/CQI threshold, there may be a case where the network device does not configure a feature combination supporting the repetition/RSRP threshold/CQI threshold, causing the terminal to be unable to select the corresponding RACH resource.

FIG. 2 is an interaction diagram of an information reporting method according to an embodiment of the present disclosure. The method may be performed by the above communication system. As shown in FIG. 2, the method may include the following steps:
Step S201: The terminal device determines to report the second information.

In some embodiments, the second information may be used for the network device to repeatedly transmit the third information.

In some embodiments, the second information may indicate the repetition number for transmitting the third information.

In some embodiments, the second information may include at least one of:
the first downlink signal quality;
a repetition number; or
an indication of whether the terminal device supports repeatedly transmitting the downlink information.

In some embodiments, the first downlink signal quality may be downlink signal quality measured by the terminal device.

In some embodiments, the first downlink signal quality may include at least one of:
RSRP of a downlink pathloss reference point, CQI of a downlink pathloss reference point, RSRP of a physical downlink control channel (PDCCH), or CQI of a PDCCH.

It should be noted that the first downlink signal quality may also include other parameters that may reflect downlink channel quality as specified by the protocol, which is not limited in embodiments of the present disclosure. The terminal device may obtain the first downlink signal quality according to the method specified by the protocol, which is not described in detail here.

In some embodiments, the name of the second information is not limited, and may be, for example, "auxiliary information," "information for assisting downlink information repetition," "information indicating repetition number," etc.

In some embodiments, the third information may indicate downlink information for the terminal device to perform random access.

In some embodiments, the downlink information may include at least one of: Msg2, Msg4, or MsgB.

In some embodiments, a bearing mode of the downlink information may include at least one of:
a PDCCH; or
a physical downlink shared channel (PDSCH).

In some embodiments, the second information may include a reporting value of Msg2/Msg4/MsgB repetition auxiliary information.

In some embodiments, the Msg2/Msg4/MsgB repetition auxiliary information may include Msg2/Msg4/MsgB PDCCH repetition and/or Msg2/Msg4/MsgB PDSCH repetition.

In some embodiments, the terminal device may determine to report the second information by at least one of the following approaches:
determining to report the second information according to the first configuration information; or
determining to report the second information according to the first downlink signal quality.

In some embodiments, the first configuration information may indicate RACH configuration.

In some embodiments, the terminal device may determine to report the second information according to the first downlink signal quality. For example, the terminal device determines to report the second information when determining that the first downlink signal quality is less than or equal to a first signal quality threshold. The first signal quality threshold may be a signal quality threshold specified by the protocol, or a signal quality threshold obtained through testing, which is not limited in embodiments of the present disclosure.

In some embodiments, the terminal device may determine to report the second information according to the first configuration information.

In some embodiments, the terminal device may determine to report the second information according to the first configuration information through at least one of the following:
in a case where it is determined that the first configuration information includes a contention-free random access (CFRA) resource for the terminal device to perform random access, and the CFRA resource includes a first RACH resource supporting reporting of the second information and includes no RACH resource other than the first RACH resource, determining to report the second information;
in a case where it is determined that a random access request transmitted by the terminal device is triggered based on system information (SI), and a RACH resource used for transmitting the SI includes the first RACH resource and includes no RACH resource other than the first RACH resource, determining to report the second information; or
in a case where it is determined that a bandwidth part (BWP) for a random access request transmitted by the terminal device includes the first RACH resource and includes no RACH resource other than the first RACH resource, determining to report the second information.

For example, if the first configuration information is configured with a CFRA resource for the terminal device's current random access, and the CFRA only includes a RACH resource supporting reporting of the second information, then it is determined to report the second information.

For another example, if the current random access of the terminal device is triggered by an SI request, and the RACH resource used for the SI request only includes a RACH resource supporting reporting of the second information, then it is determined to report the second information.

For yet another example, if the BWP on which the terminal device initiates RACH is configured with only a RACH resource supporting reporting of the second information, then it is determined to report the second information.

Step S202: The terminal device determines a first RACH resource set capable of being used for triggering all features for the terminal device to perform random access.

In some embodiments, the first configuration information may include a plurality of RACH resource sets.

In some embodiments, the first RACH resource set may include at least one RACH resource set from the first configuration information.

In some embodiments, the features may include at least one of:
Msg3 repetition;
Msg1 repetition;
RedCap;
small data; or
NSAG.

In some embodiments, if all features for the terminal device to perform random access include Msg3 repetition, Msg1 repetition, RedCap, small data, and NSAG, a RACH resource set, among the plurality of RACH resource sets of the first configuration information, capable of being used for triggering all features for the terminal device to perform random access may be used as the first RACH resource set.

Step S203: In a case where it is determined that the first RACH resource set includes one RACH resource set, the terminal device takes the fourth information corresponding to the first RACH resource set as the second information.

In some embodiments, the fourth information may include at least one of: RSRP, CQI, or a repetition number.

In some embodiments, if it is determined that the first RACH resource set includes only one RACH resource set, the fourth information corresponding to the first RACH resource set may be used as the second information.

Step S204: The terminal device reports the second information to the network device via Msg1 or MsgA.

In some embodiments, the network device may receive the second information. For example, the network device may receive the second information sent by the terminal device. For another example, the network device may also receive the second information sent by other entities.

In some embodiments, the terminal device may report the second information to the network device via Msg1.

In some embodiments, the terminal device may report the second information to the network device via MsgA.

In some embodiments, the terminal device may distinguish different second information through different RACH resource sets, that is, different RACH resource sets correspond to different second information.

It should be noted that the terminal device may also report the second information through other uplink information specified by the protocol, which is not limited in embodiments of the present disclosure.

By adopting the above method, when the terminal device determines that the second information needs to be reported, it may determine the second information based on the configured multiple RACH resources, and the terminal device may select the most suitable RACH resource for random access.

The method involved in embodiments of the present disclosure may include at least one of the above steps S201 to S204. For example, step S201 may be implemented as an independent embodiment, step S204 may be implemented as an independent embodiment, steps S202 to S203 may be implemented as an independent embodiment, step S202 + step S203 + step S204 may be implemented as an independent embodiment, but is not limited to this.

In some embodiments, reference may be made to other optional implementations recorded before or after the description corresponding to FIG. 2.

In some embodiments, the names of information, etc., are not limited to the names recorded in the embodiments. Terms such as "information," "message," "signal," "signaling," "report," "configuration," "indication," "instruction," "command," "channel," "parameter," "domain," "field," "symbol," "codeword," "codebook," "codepoint," "bit," "data," "program," "chip," etc. may be interchanged.

In some embodiments, terms such as "obtain," "acquire," "get," "receive," "transmit," "bidirectional transmission," "send and/or receive" may be interchanged, and may be interpreted as receiving from other entities, obtaining from a protocol, obtaining from an upper layer, obtaining through self-processing, self-implementation, etc.

In some embodiments, terms such as "send," "transmit," "report," "issue," "transmit," "bidirectional transmission," "send and/or receive" may be interchanged.

In some embodiments, terms such as "certain," "preset," "predefined," "set," "indicated," "a certain," "any," and "first" may be interchanged. "Certain A," "preset A," "predefined A," "set A," "indicated A," "a certain A," "any A," and "first A" may be construed as A that is pre-specified in a protocol or the like, or as A obtained through setting, configuration, or indication, or as a specific A, a certain A, any A, or a first A, etc., but are not limited to this.

FIG. 3 is an interaction diagram of an information reporting method according to an embodiment of the present disclosure. The method may be performed by the above communication system. As shown in FIG. 3, the method may include the following steps:
Step S301: The terminal device determines to report the second information.

For optional implementations of step S301, reference may be made to optional implementations of step S201 in FIG. 2 and other related parts in the embodiments involving FIG. 2, which are not described in detail here.

Step S302: The terminal device determines a first RACH resource set capable of being used for triggering all features for the terminal device to perform random access.

For optional implementations of step S302, reference may be made to optional implementations of step S202 in FIG. 2 and other related parts in the embodiments involving FIG. 2, which are not described in detail here.

Step S303: The terminal device determines that the first RACH resource set includes a plurality of RACH resource sets.

Step S304: The terminal device determines a first mapping value according to the first downlink signal quality and a first association relationship.

In some embodiments, the first association relationship may include a correspondence between different downlink signal qualities and mapping values.

In some embodiments, the first association relationship may be pre-defined.

The mapping value may include positive integers such as 1, 2, 4, 8, etc., which is not limited in embodiments of the present disclosure.

In some embodiments, a mapping value corresponding to the first downlink signal quality in the first association relationship may be used as the first mapping value.

Step S305: The terminal device determines at least one first reporting value according to the first mapping value and a second mapping value supported by the network device.

In some embodiments, the terminal device may pre-store the second mapping value supported by the network device.

In some embodiments, the terminal device may also obtain the second mapping value from the network device.

In some embodiments, the first reporting value may be determined by any one of the following approaches:
taking a second mapping value, among one or more second mapping values, greater than or equal to the first mapping value as the first reporting value; or
taking a second mapping value, among one or more second mapping values, less than or equal to the first mapping value as the first reporting value.

Step S306: The terminal device determines a second reporting value corresponding to each RACH resource set in the first RACH resource set.

In some embodiments, the second reporting value corresponding to the RACH resource set may be determined according to a second association relationship. The second association relationship may include a correspondence between different RACH resource sets and reporting values, and the second association relationship may be pre-defined.

Step S307: The terminal device takes a RACH resource set corresponding to a second reporting value falling within the at least one first reporting value among a plurality of second reporting values as a second RACH resource set.

In some embodiments, for each second reporting value among the plurality of second reporting values, it may be determined whether the second reporting value falls within the at least one first reporting value. If it is determined that the second reporting value falls within the at least one first reporting value, the RACH resource set corresponding to the second reporting value is used as the second RACH resource set.

Step S308: The terminal device determines the second information according to the fourth information corresponding to the at least one second RACH resource set.

In some embodiments, the second information may be determined by any one of the following approaches:
taking a minimum value among the fourth information corresponding to the at least one second RACH resource set as the second information; or
taking a maximum value among the fourth information corresponding to the at least one second RACH resource set as the second information.

For example, if the fourth information is RSRP, the minimum RSRP among the RSRPs corresponding to the at least one second RACH resource set may be determined, and the minimum RSRP is used as the second information; if the fourth information is CQI, the minimum CQI among the CQIs corresponding to the at least one second RACH resource set may be determined, and the minimum CQI is used as the second information; if the fourth information is a repetition number, the minimum repetition number among the repetition numbers corresponding to the at least one second RACH resource set may be determined, and the minimum repetition number is used as the second information; if the fourth information includes RSRP and CQI, the average value of RSRP and CQI corresponding to the at least one second RACH resource set may be determined, and the RSRP and CQI corresponding to the minimum average value are used as the second information.

It should be noted that the above approach for determining the second information is an example, and the implementation of embodiments of the present disclosure is not limited to this.

Step S309: The terminal device reports the second information to the network device via Msg1 or MsgA.

For optional implementations of step S309, reference may be made to optional implementations of step S204 in FIG. 2 and other related parts in the embodiments involving FIG. 2, which are not described in detail here.

The method involved in embodiments of the present disclosure may include at least one of the above steps S301 to S309. For example, step S301 may be implemented as an independent embodiment, step S309 may be implemented as an independent embodiment, steps S304 to S305 may be implemented as an independent embodiment, but is not limited to this.

In some embodiments, the above steps S301 to S309 are all optional steps. For example, step S301 is optional, and in different embodiments, one or more of these steps may be omitted or replaced. For another example, step S302 is optional, and in different embodiments, one or more of these steps may be omitted or replaced. For another example, step S303 is optional, and in different embodiments, one or more of these steps may be omitted or replaced.

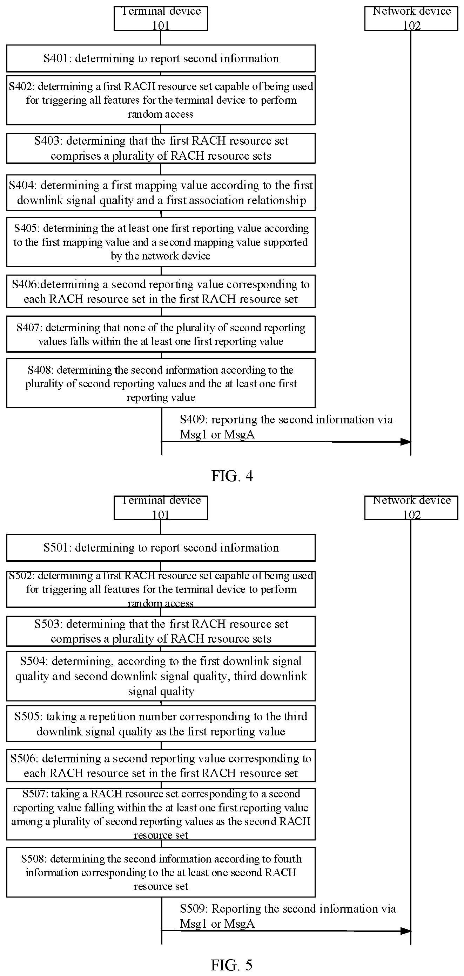

FIG. 4 is an interaction diagram of an information reporting method according to an embodiment of the present disclosure. The method may be performed by the above communication system. As shown in FIG. 4, the method may include the following steps:

Step S401: The terminal device determines to report the second information.

For optional implementations of step S401, reference may be made to optional implementations of step S201 in FIG. 2 and other related parts in the embodiments involving FIG. 2, which are not described in detail here.

Step S402: The terminal device determines a first RACH resource set capable of being used for triggering all features for the terminal device to perform random access.

For optional implementations of step S402, reference may be made to optional implementations of step S202 in FIG. 2 and other related parts in the embodiments involving FIG. 2, which are not described in detail here.

Step S403: The terminal device determines that the first RACH resource set includes a plurality of RACH resource sets.

Step S404: The terminal device determines a first mapping value according to the first downlink signal quality and a first association relationship.

For optional implementations of step S404, reference may be made to optional implementations of step S304 in FIG. 3 and other related parts in the embodiments involving FIG. 3, which are not described in detail here.

Step S405: The terminal device determines at least one first reporting value according to the first mapping value and a second mapping value supported by the network device.

For optional implementations of step S405, reference may be made to optional implementations of step S305 in FIG. 3 and other related parts in the embodiments involving FIG. 3, which are not described in detail here.

Step S406: The terminal device determines a second reporting value corresponding to each RACH resource set in the first RACH resource set.

For optional implementations of step S406, reference may be made to optional implementations of step S306 in FIG. 3 and other related parts in the embodiments involving FIG. 3, which are not described in detail here.

Step S407: The terminal device determines that none of the plurality of second reporting values falls within the at least one first reporting value.

For example, if it is determined that no second reporting value is included in the at least one first reporting value, it may be determined that none of the plurality of second reporting values falls within the at least one first reporting value.

Step S408: The terminal device determines the second information according to the plurality of second reporting values and the at least one first reporting value.

In some embodiments, the second information may be determined by at least one of the following approaches:
taking a minimum value among one or more third reporting values as the second information, in which the one or more third reporting values include a second reporting value, among the plurality of second reporting values, greater than a fourth reporting value, and the fourth reporting value is a maximum value among the at least one first reporting value; or
taking a maximum value among one or more fifth reporting values as the second information, in which the one or more fifth reporting values include a second reporting value, among the plurality of second reporting values, less than a sixth reporting value, and the sixth reporting value is a minimum value among the at least one first reporting value.

In an implementation, the maximum value among the at least one first reporting value may be determined to obtain the fourth reporting value, a second reporting value greater than the fourth reporting value is determined from the plurality of second reporting values to obtain the one or more third reporting values, and the minimum value among the one or more third reporting values is used as the second information. For example, if the at least one first reporting value includes 5, 6, 7, 8, and the second reporting values include 1, 2, 9, 10, then the fourth reporting value is determined to be 8, the one or more third reporting values include 9 and 10, the minimum value among the one or more third reporting values is 9, that is, the second information is 9.

In another implementation, the minimum value among the at least one first reporting value may be determined to obtain the sixth reporting value, a second reporting value less than the sixth reporting value is determined from the plurality of second reporting values to obtain the one or more fifth reporting values, and the maximum value among the one or more fifth reporting values is used as the second information. For example, if the at least one first reporting value includes 5, 6, 7, 8, and the second reporting values include 1, 2, 9, 10, then the sixth reporting value is determined to be 5, the one or more fifth reporting values include 1 and 2, the maximum value among the one or more fifth reporting values is 2, that is, the second information is 2.

In another implementation, after determining the minimum value among the one or more third reporting values and the maximum value among the one or more fifth reporting values, one of the minimum value among the one or more third reporting values and the maximum value among the one or more fifth reporting values may be selected as the second information. For example, any one of the minimum value among the one or more third reporting values and the maximum value among the one or more fifth reporting values may be used as the second information, or one of them may be determined as the second information according to the protocol, which is not limited in embodiments of the present disclosure.

In some embodiments, in a case where it is determined that all of the plurality of second reporting values are less than the fourth reporting value, the maximum value among the one or more fifth reporting values is taken as the second information.

For example, the second information may be preferentially determined through the first implementation described above. If the one or more third reporting values are not obtained, that is, all of the plurality of second reporting values are less than the fourth reporting value (there is no second reporting value greater than the fourth reporting value), the second information is determined through the second implementation, that is, the one or more fifth reporting values are determined, and the maximum value among the one or more fifth reporting values is used as the second information.

In some embodiments, in a case where it is determined that all of the plurality of second reporting values are greater than the sixth reporting value, the minimum value among the one or more third reporting values is taken as the second information.

For example, the second information may be preferentially determined through the second implementation described above. If the one or more fifth reporting values are not obtained, that is, all of the plurality of second reporting values are greater than the sixth reporting value (there is no second reporting value less than the sixth reporting value), the second information is determined through the first implementation, that is, the one or more third reporting values are determined, and the minimum value among the one or more third reporting values is used as the second information.

Step S409: The terminal device reports the second information to the network device via Msg1 or MsgA.

For optional implementations of step S409, reference may be made to optional implementations of step S204 in FIG. 2 and other related parts in the embodiments involving FIG. 2, which are not described in detail here.

The method involved in embodiments of the present disclosure may include at least one of the above steps S401 to S409. For example, step S401 may be implemented as an independent embodiment, step S409 may be implemented as an independent embodiment, steps S404 to S405 may be implemented as an independent embodiment, steps S407 to S408 may be implemented as an independent embodiment, but is not limited to this.

In some embodiments, the above steps S401 to S409 are all optional steps. For example, step S401 is optional, and in different embodiments, one or more of these steps may be omitted or replaced. For another example, step S402 is optional, and in different embodiments, one or more of these steps may be omitted or replaced. For another example, step S403 is optional, and in different embodiments, one or more of these steps may be omitted or replaced.

FIG. 5 is an interaction diagram of an information reporting method according to an embodiment of the present disclosure. The method may be performed by the above communication system. As shown in FIG. 5, the method may include the following steps:
Step S501: The terminal device determines to report the second information.

For optional implementations of step S501, reference may be made to optional implementations of step S201 in FIG. 2 and other related parts in the embodiments involving FIG. 2, which are not described in detail here.

Step S502: The terminal device determines a first RACH resource set capable of being used for triggering all features for the terminal device to perform random access.

For optional implementations of step S502, reference may be made to optional implementations of step S202 in FIG. 2 and other related parts in the embodiments involving FIG. 2, which are not described in detail here.

Step S503: The terminal device determines that the first RACH resource set includes a plurality of RACH resource sets.

Step S504: The terminal device determines third downlink signal quality according to the first downlink signal quality and second downlink signal quality.

In some embodiments, the second downlink signal quality may be a downlink signal quality threshold corresponding to a first repetition number, and the first repetition number may be a repetition number supported by the network device.

In some embodiments, the third downlink signal quality may be determined by any one of the following approaches:
taking second downlink signal quality, among the one or more second downlink signal qualities, greater than or equal to the first downlink signal quality as the third downlink signal quality; or
taking second downlink signal quality, among the one or more second downlink signal qualities, less than or equal to the first downlink signal quality as the third downlink signal quality.

For example, for each second downlink signal quality, the terminal device may compare the second downlink signal quality with the first downlink signal quality. If the second downlink signal quality is greater than or equal to the first downlink signal quality, the second downlink signal quality may be used as the third downlink signal quality.

Step S505: The terminal device takes a repetition number corresponding to the third downlink signal quality as the first reporting value.

In some embodiments, the repetition number corresponding to the third downlink signal quality may be determined according to a third association relationship. The third association relationship may include a correspondence between different downlink signal qualities and repetition numbers.

Step S506: The terminal device determines a second reporting value corresponding to each RACH resource set in the first RACH resource set.

For optional implementations of step S506, reference may be made to optional implementations of step S306 in FIG. 3 and other related parts in the embodiments involving FIG. 3, which are not described in detail here.

Step S507: The terminal device takes a RACH resource set corresponding to a second reporting value falling within the at least one first reporting value among a plurality of second reporting values as a second RACH resource set.

For optional implementations of step S507, reference may be made to optional implementations of step S307 in FIG. 3 and other related parts in the embodiments involving FIG. 3, which are not described in detail here.

Step S508: The terminal device determines the second information according to the fourth information corresponding to the at least one second RACH resource set.

For optional implementations of step S508, reference may be made to optional implementations of step S308 in FIG. 3 and other related parts in the embodiments involving FIG. 3, which are not described in detail here.

Step S509: The terminal device reports the second information to the network device via Msg1 or MsgA.

For optional implementations of step S509, reference may be made to optional implementations of step S204 in FIG. 2 and other related parts in the embodiments involving FIG. 2, which are not described in detail here.

In some embodiments, the above steps S507 to S508 may also be replaced with steps S407 to S408.

The method involved in embodiments of the present disclosure may include at least one of the above steps S501 to S509. For example, step S501 may be implemented as an independent embodiment, step S509 may be implemented as an independent embodiment, steps S504 to S505 may be implemented as an independent embodiment, but is not limited to this.

In some embodiments, the above steps S501 to S509 are all optional steps. For example, step S501 is optional, and in different embodiments, one or more of these steps may be omitted or replaced. For another example, step S502 is optional, and in different embodiments, one or more of these steps may be omitted or replaced. For another example, step S503 is optional, and in different embodiments, one or more of these steps may be omitted or replaced.

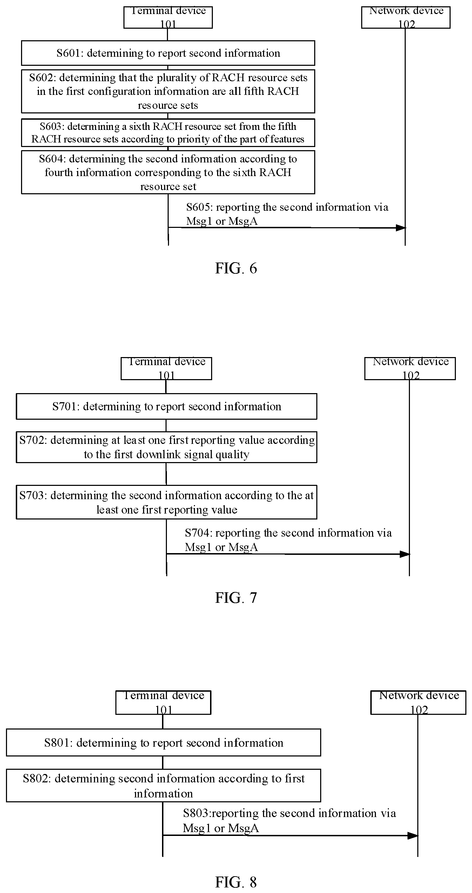

FIG. 6 is an interaction diagram of an information reporting method according to an embodiment of the present disclosure. The method may be performed by the above communication system. As shown in FIG. 6, the method may include the following steps:
Step S601: The terminal device determines to report the second information.

For optional implementations of step S601, reference may be made to optional implementations of step S201 in FIG. 2 and other related parts in the embodiments involving FIG. 2, which are not described in detail here.

Step S602: The terminal device determines that the plurality of RACH resource sets in the first configuration information are all fifth RACH resource sets.

In some embodiments, the fifth RACH resource sets are capable of being used for triggering a part of features for the terminal device to perform random access, and not capable of being used for triggering all features for the terminal device to perform random access.

For example, if there is no RACH resource set capable of being used for triggering all features for the terminal device to perform random access in the first configuration information, it means that the plurality of RACH resource sets in the first configuration information are all fifth RACH resource sets.

Step S603: The terminal device determines a sixth RACH resource set from the fifth RACH resource sets according to the priority of the part of features.

In some embodiments, the features supported by the plurality of RACH resource sets in the first configuration information may be sorted. For example, they are arranged in descending order of priority, and the RACH resource set corresponding to the feature with the highest priority is used as the sixth RACH resource set.

In some embodiments, the sixth RACH resource set may include at least one RACH resource set.

Step S604: The terminal device determines the second information according to the fourth information corresponding to the sixth RACH resource set.

In some embodiments, in a case where it is determined that the sixth RACH resource set includes one seventh RACH resource set, fourth information corresponding to the seventh RACH resource set is taken as the second information, in which the seventh RACH resource set is a RACH resource set supporting reporting of the second information.

In some embodiments, in a case where it is determined that the sixth RACH resource set includes a plurality of seventh RACH resource sets, at least one eighth RACH resource set is determined from the plurality of seventh RACH resource sets according to the first downlink signal quality, and the second information is determined according to fourth information corresponding to the at least one eighth RACH resource set.

For example, if the sixth RACH resource set includes one RACH resource set capable of supporting reporting of the second information, the fourth information corresponding to the RACH resource set is used as the second information; if the sixth RACH resource set includes a plurality of RACH resource sets capable of supporting reporting of the second information, one eighth RACH resource set may be selected from the plurality of seventh RACH resource sets, and the fourth information corresponding to the eighth RACH resource set is used as the second information.

It should be noted that for the approach for determining the eighth RACH resource set, reference may be made to the approach for determining the second RACH resource set in steps S304 to S307, which is not described in detail here. For the approach for determining the second information, reference may be made to the implementation of step S308, which is not described in detail here.

Step S605: The terminal device reports the second information to the network device via Msg1 or MsgA.

For optional implementations of step S605, reference may be made to optional implementations of step S204 in FIG. 2 and other related parts in the embodiments involving FIG. 2, which are not described in detail here.

The method involved in embodiments of the present disclosure may include at least one of the above steps S601 to S605. For example, step S601 may be implemented as an independent embodiment, step S605 may be implemented as an independent embodiment, step S602 + step S603 + step S604 may be implemented as an independent embodiment, but is not limited to this.

In some embodiments, the above steps S601 to S605 are all optional steps. For example, step S601 is optional, and in different embodiments, one or more of these steps may be omitted or replaced. For another example, step S602 is optional, and in different embodiments, one or more of these steps may be omitted or replaced.

FIG. 7 is an interaction diagram of an information reporting method according to an embodiment of the present disclosure. The method may be performed by the above communication system. As shown in FIG. 7, the method may include the following steps:
Step S701: The terminal device determines to report the second information.

For optional implementations of step S701, reference may be made to optional implementations of step S201 in FIG. 2 and other related parts in the embodiments involving FIG. 2, which are not described in detail here.

Step S702: The terminal device determines at least one first reporting value according to the first downlink signal quality.

For optional implementations of step S702, reference may be made to optional implementations of steps S304 to S305 in FIG. 3, steps S504 to S505 in FIG. 5, and other related parts in the embodiments involving FIG. 3 and FIG. 5, which are not described in detail here.

Step S703: The terminal device determines the second information according to the at least one first reporting value.

In some embodiments, a first reporting value corresponding to a RACH resource set used for transmitting a preamble among the at least one first reporting value is taken as the second information.

In some embodiments, any one of the at least one first reporting value may be selected as the second information. For example, the maximum value among the at least one first reporting value is used as the second information, or the minimum value among the at least one first reporting value is used as the second information.

Step S704: The terminal device reports the second information to the network device via Msg1 or MsgA.

For optional implementations of step S704, reference may be made to optional implementations of step S204 in FIG. 2 and other related parts in the embodiments involving FIG. 2, which are not described in detail here.

The method involved in embodiments of the present disclosure may include at least one of the above steps S701 to S704. For example, step S701 may be implemented as an independent embodiment, step S704 may be implemented as an independent embodiment, steps S702 to S703 may be implemented as an independent embodiment, but is not limited to this.

In some embodiments, the above steps S701 to S704 are all optional steps. For example, step S701 is optional, and in different embodiments, one or more of these steps may be omitted or replaced.

FIG. 8 is an interaction diagram of an information reporting method according to an embodiment of the present disclosure. The method may be performed by the above communication system. As shown in FIG. 8, the method may include the following steps:
Step S801: The terminal device determines to report the second information.

For optional implementations of step S801, reference may be made to optional implementations of step S201 in FIG. 2 and other related parts in the embodiments involving FIG. 2, which are not described in detail here.

Step S802: The terminal device determines the second information according to the first information.

For optional implementations of step S802, reference may be made to optional implementations of steps S202 to S203 in FIG. 2, steps S302 to S308 in FIG. 3, steps S402 to S408 in FIG. 4, steps S502 to S508 in FIG. 5, steps S602 to S604 in FIG. 6, steps S702 to S703 in FIG. 7, and other related parts in the embodiments involving FIG. 2, FIG. 3, FIG. 4, FIG. 5, FIG. 6, and FIG. 7, which are not described in detail here.

Step S803: The terminal device reports the second information to the network device via Msg1 or MsgA.

For optional implementations of step S803, reference may be made to optional implementations of step S204 in FIG. 2 and other related parts in the embodiments involving FIG. 2, which are not described in detail here.

In some embodiments, the above steps S801 to S803 are all optional steps.

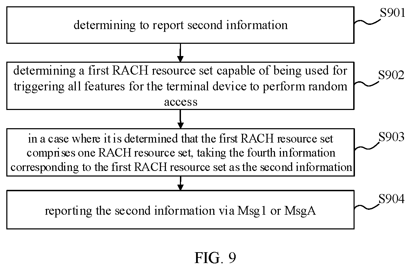

FIG. 9 is a schematic flowchart of an information reporting method according to an embodiment of the present disclosure. As shown in FIG. 9, the embodiment of the present disclosure relates to an information reporting method, which may be performed by a terminal device. The method may include the following steps:
Step S901: It is determined to report the second information.

For optional implementations of step S901, reference may be made to optional implementations of step S201 in FIG. 2 and other related parts in the embodiments involving FIG. 2, which are not described in detail here.

Step S902: A first RACH resource set capable of being used for triggering all features for the terminal device to perform random access is determined.

For optional implementations of step S902, reference may be made to optional implementations of step S202 in FIG. 2 and other related parts in the embodiments involving FIG. 2, which are not described in detail here.

Step S903: In a case where it is determined that the first RACH resource set includes one RACH resource set, the fourth information corresponding to the first RACH resource set is taken as the second information.

For optional implementations of step S903, reference may be made to optional implementations of step S203 in FIG. 2 and other related parts in the embodiments involving FIG. 2, which are not described in detail here.

Step S904: The second information is reported via Msg1 or MsgA.

For optional implementations of step S904, reference may be made to optional implementations of step S204 in FIG. 2 and other related parts in the embodiments involving FIG. 2, which are not described in detail here.

In some embodiments, the terminal device may report the second information to the network device, but is not limited to this, and the terminal device may also report the second information to other entities.

The method involved in embodiments of the present disclosure may include at least one of the above steps S901 to S904. For example, step S901 may be implemented as an independent embodiment, step S904 may be implemented as an independent embodiment, steps S902 to S903 may be implemented as an independent embodiment, step S902 + step S903 + step S904 may be implemented as an independent embodiment, but is not limited to this.

In some embodiments, the above steps S901 to S904 may all be optional steps. For example, steps S901 and S904 are optional, and in different embodiments, one or more of these steps may be omitted or replaced.

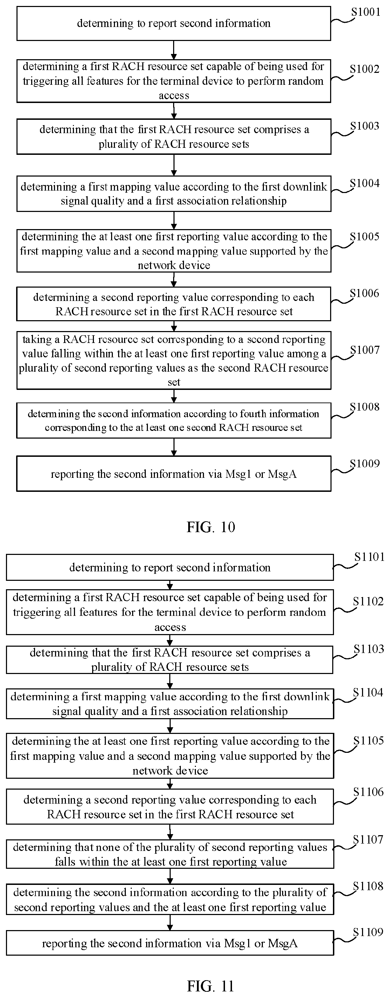

FIG. 10 is a schematic flowchart of an information reporting method according to an embodiment of the present disclosure. As shown in FIG. 10, the embodiment of the present disclosure relates to an information reporting method, which may be performed by a terminal device. The method may include the following steps:
Step S1001: It is determined to report the second information.

For optional implementations of step S1001, reference may be made to optional implementations of step S201 in FIG. 2, step S901 in FIG. 9, and other related parts in the embodiments involving FIG. 2 and FIG. 9, which are not described in detail here.

Step S1002: A first RACH resource set capable of being used for triggering all features for the terminal device to perform random access is determined.

For optional implementations of step S1002, reference may be made to optional implementations of step S202 in FIG. 2, step S902 in FIG. 9, and other related parts in the embodiments involving FIG. 2 and FIG. 9, which are not described in detail here.

Step S1003: It is determined that the first RACH resource set includes a plurality of RACH resource sets.

For optional implementations of step S1003, reference may be made to optional implementations of step S303 in FIG. 3 and other related parts in the embodiments involving FIG. 3, which are not described in detail here.

Step S1004: A first mapping value is determined according to the first downlink signal quality and a first association relationship.

For optional implementations of step S1004, reference may be made to optional implementations of step S304 in FIG. 3 and other related parts in the embodiments involving FIG. 3, which are not described in detail here.

Step S1005: At least one first reporting value is determined according to the first mapping value and a second mapping value supported by the network device.

For optional implementations of step S1005, reference may be made to optional implementations of step S305 in FIG. 3 and other related parts in the embodiments involving FIG. 3, which are not described in detail here.

Step S1006: A second reporting value corresponding to each RACH resource set in the first RACH resource set is determined.

For optional implementations of step S1006, reference may be made to optional implementations of step S306 in FIG. 3 and other related parts in the embodiments involving FIG. 3, which are not described in detail here.

Step S1007: A RACH resource set corresponding to a second reporting value falling within the at least one first reporting value among a plurality of second reporting values is taken as a second RACH resource set.

For optional implementations of step S1007, reference may be made to optional implementations of step S307 in FIG. 3 and other related parts in the embodiments involving FIG. 3, which are not described in detail here.

Step S1008: The second information is determined according to the fourth information corresponding to the at least one second RACH resource set.

For optional implementations of step S1008, reference may be made to optional implementations of step S308 in FIG. 3 and other related parts in the embodiments involving FIG. 3, which are not described in detail here.

Step S1009: The second information is reported via Msg1 or MsgA.

For optional implementations of step S1009, reference may be made to optional implementations of step S204 in FIG. 2, step S904 in FIG. 9, and other related parts in the embodiments involving FIG. 2 and FIG. 9, which are not described in detail here.

The method involved in embodiments of the present disclosure may include at least one of the above steps S1001 to S1009. For example, step S1001 may be implemented as an independent embodiment, step S1009 may be implemented as an independent embodiment, steps S1004 to S1005 may be implemented as an independent embodiment, but is not limited to this.

In some embodiments, the above steps S1001 to S1009 are all optional steps. For example, step S1001 is optional, and in different embodiments, one or more of these steps may be omitted or replaced. For another example, step S1002 is optional, and in different embodiments, one or more of these steps may be omitted or replaced. For another example, step S1003 is optional, and in different embodiments, one or more of these steps may be omitted or replaced.

FIG. 11 is a schematic flowchart of an information reporting method according to an embodiment of the present disclosure. As shown in FIG. 11, the embodiment of the present disclosure relates to an information reporting method, which may be performed by a terminal device. The method may include the following steps:
Step S1101: It is determined to report the second information.

For optional implementations of step S1101, reference may be made to optional implementations of step S201 in FIG. 2, step S901 in FIG. 9, and other related parts in the embodiments involving FIG. 2 and FIG. 9, which are not described in detail here.

Step S1102: A first RACH resource set capable of being used for triggering all features for the terminal device to perform random access is determined.

For optional implementations of step S1102, reference may be made to optional implementations of step S202 in FIG. 2, step S902 in FIG. 9, and other related parts in the embodiments involving FIG. 2 and FIG. 9, which are not described in detail here.

Step S1103: It is determined that the first RACH resource set includes a plurality of RACH resource sets.

For optional implementations of step S1103, reference may be made to optional implementations of step S403 in FIG. 4 and other related parts in the embodiments involving FIG. 4, which are not described in detail here.

Step S1104: A first mapping value is determined according to the first downlink signal quality and a first association relationship.

For optional implementations of step S1104, reference may be made to optional implementations of step S404 in FIG. 4 and other related parts in the embodiments involving FIG. 4, which are not described in detail here.

Step S1105: At least one first reporting value is determined according to the first mapping value and a second mapping value supported by the network device.

For optional implementations of step S1105, reference may be made to optional implementations of step S405 in FIG. 4 and other related parts in the embodiments involving FIG. 4, which are not described in detail here.

Step S1106: A second reporting value corresponding to each RACH resource set in the first RACH resource set is determined.

For optional implementations of step S1106, reference may be made to optional implementations of step S406 in FIG. 4 and other related parts in the embodiments involving FIG. 4, which are not described in detail here.

Step S1107: It is determined that none of the plurality of second reporting values falls within the at least one first reporting value.

For optional implementations of step S1107, reference may be made to optional implementations of step S407 in FIG. 4 and other related parts in the embodiments involving FIG. 4, which are not described in detail here.

Step S1108: The second information is determined according to the plurality of second reporting values and the at least one first reporting value.

For optional implementations of step S1108, reference may be made to optional implementations of step S408 in FIG. 4 and other related parts in the embodiments involving FIG. 4, which are not described in detail here.

Step S1109: The second information is reported via Msg1 or MsgA.

For optional implementations of step S1109, reference may be made to optional implementations of step S204 in FIG. 2, step S904 in FIG. 9, and other related parts in the embodiments involving FIG. 2 and FIG. 9, which are not described in detail here.

The method involved in embodiments of the present disclosure may include at least one of the above steps S1101 to S1109. For example, step S1101 may be implemented as an independent embodiment, step S1109 may be implemented as an independent embodiment, steps S1104 to S1105 may be implemented as an independent embodiment, but is not limited to this.

In some embodiments, the above steps S1101 to S1109 are all optional steps. For example, step S1101 is optional, and in different embodiments, one or more of these steps may be omitted or replaced. For another example, step S1102 is optional, and in different embodiments, one or more of these steps may be omitted or replaced. For another example, step S1103 is optional, and in different embodiments, one or more of these steps may be omitted or replaced.

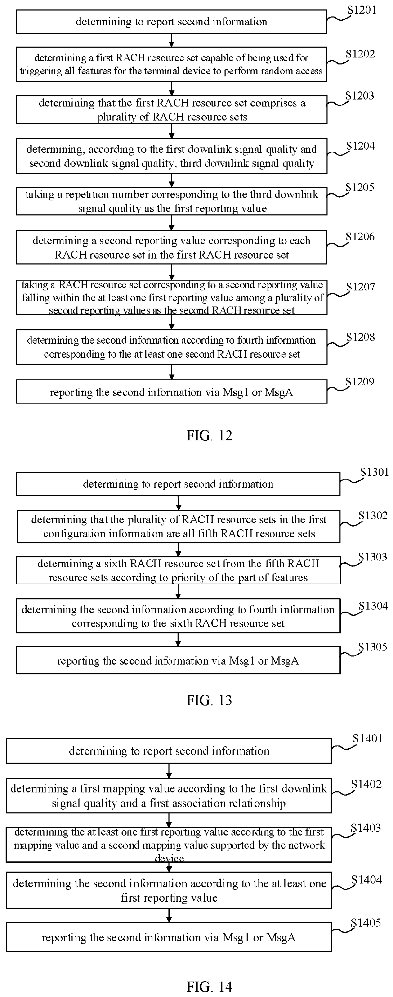

FIG. 12 is a schematic flowchart of an information reporting method according to an embodiment of the present disclosure. As shown in FIG. 12, the embodiment of the present disclosure relates to an information reporting method, which may be performed by a terminal device. The method may include the following steps:
Step S1201: It is determined to report the second information.

For optional implementations of step S1201, reference may be made to optional implementations of step S201 in FIG. 2, step S901 in FIG. 9, and other related parts in the embodiments involving FIG. 2 and FIG. 9, which are not described in detail here.

Step S1202: A first RACH resource set capable of being used for triggering all features for the terminal device to perform random access is determined.

For optional implementations of step S1202, reference may be made to optional implementations of step S202 in FIG. 2, step S902 in FIG. 9, and other related parts in the embodiments involving FIG. 2 and FIG. 9, which are not described in detail here.

Step S1203: It is determined that the first RACH resource set includes a plurality of RACH resource sets.

For optional implementations of step S1203, reference may be made to optional implementations of step S503 in FIG. 5 and other related parts in the embodiments involving FIG. 5, which are not described in detail here.

Step S1204: Third downlink signal quality is determined according to the first downlink signal quality and second downlink signal quality.

For optional implementations of step S1204, reference may be made to optional implementations of step S504 in FIG. 5 and other related parts in the embodiments involving FIG. 5, which are not described in detail here.

Step S1205: A repetition number corresponding to the third downlink signal quality is taken as the first reporting value.

For optional implementations of step S1205, reference may be made to optional implementations of step S505 in FIG. 5 and other related parts in the embodiments involving FIG. 5, which are not described in detail here.

Step S1206: A second reporting value corresponding to each RACH resource set in the first RACH resource set is determined.

For optional implementations of step S1206, reference may be made to optional implementations of step S506 in FIG. 5 and other related parts in the embodiments involving FIG. 5, which are not described in detail here.

Step S1207: A RACH resource set corresponding to a second reporting value falling within the at least one first reporting value among a plurality of second reporting values is taken as a second RACH resource set.

For optional implementations of step S1207, reference may be made to optional implementations of step S507 in FIG. 5 and other related parts in the embodiments involving FIG. 5, which are not described in detail here.

Step S1208: The second information is determined according to the fourth information corresponding to the at least one second RACH resource set.

For optional implementations of step S1208, reference may be made to optional implementations of step S508 in FIG. 5 and other related parts in the embodiments involving FIG. 5, which are not described in detail here.

Step S1209: The second information is reported via Msg1 or MsgA.

For optional implementations of step S1209, reference may be made to optional implementations of step S204 in FIG. 2, step S904 in FIG. 9, and other related parts in the embodiments involving FIG. 2 and FIG. 9, which are not described in detail here.

The method involved in embodiments of the present disclosure may include at least one of the above steps S1201 to S1209. For example, step S1201 may be implemented as an independent embodiment, step S1209 may be implemented as an independent embodiment, steps S1204 to S1205 may be implemented as an independent embodiment, but is not limited to this.

In some embodiments, the above steps S1201 to S1209 are all optional steps. For example, step S1201 is optional, and in different embodiments, one or more of these steps may be omitted or replaced. For another example, step S1202 is optional, and in different embodiments, one or more of these steps may be omitted or replaced. For another example, step S1203 is optional, and in different embodiments, one or more of these steps may be omitted or replaced.

FIG. 13 is a schematic flowchart of an information reporting method according to an embodiment of the present disclosure. As shown in FIG. 13, the embodiment of the present disclosure relates to an information reporting method, which may be performed by a terminal device. The method may include the following steps:
Step S1301: It is determined to report the second information.

For optional implementations of step S1301, reference may be made to optional implementations of step S201 in FIG. 2, step S901 in FIG. 9, and other related parts in the embodiments involving FIG. 2 and FIG. 9, which are not described in detail here.

Step S1302: It is determined that the plurality of RACH resource sets in the first configuration information are all fifth RACH resource sets.

For optional implementations of step S1302, reference may be made to optional implementations of step S602 in FIG. 6 and other related parts in the embodiments involving FIG. 6, which are not described in detail here.

Step S1303: A sixth RACH resource set is determined from the fifth RACH resource sets according to the priority of the part of features.

For optional implementations of step S1303, reference may be made to optional implementations of step S603 in FIG. 6 and other related parts in the embodiments involving FIG. 6, which are not described in detail here.

Step S1304: The second information is determined according to the fourth information corresponding to the sixth RACH resource set.

For optional implementations of step S1304, reference may be made to optional implementations of step S604 in FIG. 6 and other related parts in the embodiments involving FIG. 6, which are not described in detail here.

Step S1305: The second information is reported via Msg1 or MsgA.

For optional implementations of step S1305, reference may be made to optional implementations of step S204 in FIG. 2, step S904 in FIG. 9, and other related parts in the embodiments involving FIG. 2 and FIG. 9, which are not described in detail here.

The method involved in embodiments of the present disclosure may include at least one of the above steps S1301 to S1305. For example, step S1301 may be implemented as an independent embodiment, step S1105 may be implemented as an independent embodiment, step S1302 + step S1303 + step S1304 may be implemented as an independent embodiment, but is not limited to this.

In some embodiments, the above steps S1301 to S1305 are all optional steps. For example, step S1301 is optional, and in different embodiments, one or more of these steps may be omitted or replaced. For another example, step S1302 is optional, and in different embodiments, one or more of these steps may be omitted or replaced.

FIG. 14 is a schematic flowchart of an information reporting method according to an embodiment of the present disclosure. As shown in FIG. 14, the embodiment of the present disclosure relates to an information reporting method, which may be performed by a terminal device. The method may include the following steps:
Step S1401: It is determined to report the second information.

For optional implementations of step S1401, reference may be made to optional implementations of step S201 in FIG. 2, step S901 in FIG. 9, and other related parts in the embodiments involving FIG. 2 and FIG. 9, which are not described in detail here.

Step S1402: A first mapping value is determined according to the first downlink signal quality and a first association relationship.

For optional implementations of step S1402, reference may be made to optional implementations of step S304 in FIG. 3 and other related parts in the embodiments involving FIG. 3, which are not described in detail here.

Step S1403: At least one first reporting value is determined according to the first mapping value and a second mapping value supported by the network device.

For optional implementations of step S1403, reference may be made to optional implementations of step S305 in FIG. 3 and other related parts in the embodiments involving FIG. 3, which are not described in detail here.

Step S1404: The second information is determined according to the at least one first reporting value.

For optional implementations of step S1404, reference may be made to optional implementations of step S703 in FIG. 7 and other related parts in the embodiments involving FIG. 7, which are not described in detail here.

Step S1405: The second information is reported via Msg1 or MsgA.

For optional implementations of step S1405, reference may be made to optional implementations of step S204 in FIG. 2, step S904 in FIG. 9, and other related parts in the embodiments involving FIG. 2 and FIG. 9, which are not described in detail here.

The method involved in embodiments of the present disclosure may include at least one of the above steps S1401 to S1405. For example, step S1401 may be implemented as an independent embodiment, step S1405 may be implemented as an independent embodiment, step S1402 + step S1403 + step S1404 may be implemented as an independent embodiment, but is not limited to this.

In some embodiments, the above steps S1401 to S1405 are all optional steps. For example, step S1401 is optional, and in different embodiments, one or more of these steps may be omitted or replaced.

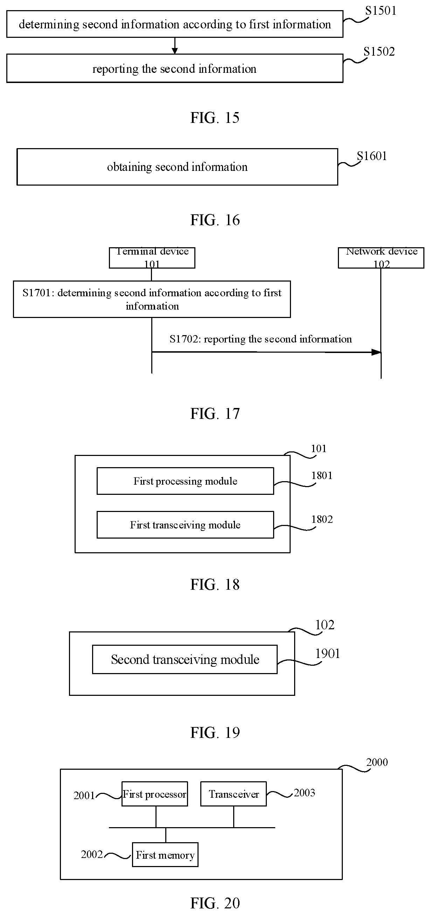

FIG. 15 is a schematic flowchart of an information reporting method according to an embodiment of the present disclosure. As shown in FIG. 15, the embodiment of the present disclosure relates to an information reporting method, which may be performed by a terminal device. The method may include the following steps:
Step S1501: The second information is determined according to the first information.

For optional implementations of step S1501, reference may be made to optional implementations of steps S202 to S203 in FIG. 2, steps S302 to S308 in FIG. 3, steps S402 to S408 in FIG. 4, steps S502 to S508 in FIG. 5, steps S602 to S604 in FIG. 6, steps S702 to S703 in FIG. 7, steps S902 to S903 in FIG. 9, steps S1002 to S1008 in FIG. 10, steps S1102 to S1108 in FIG. 11, steps S1202 to S1208 in FIG. 12, steps S1302 to S1304 in FIG. 13, steps S1402 to S1404 in FIG. 14, and other related parts in the embodiments involving FIG. 2, FIG. 3, FIG. 4, FIG. 5, FIG. 6, FIG. 7, FIG. 9, FIG. 10, FIG. 11, FIG. 12, FIG. 13, and FIG. 14, which are not described in detail here.

Step S1502: The second information is reported.

For optional implementations of step S1502, reference may be made to optional implementations of step S204 in FIG. 2, step S904 in FIG. 9, and other related parts in the embodiments involving FIG. 2 and FIG. 9, which are not described in detail here.

In some embodiments, the method further includes:
determining to report the second information.

In some embodiments, determining to report the second information includes at least one of:
determining to report the second information according to the first configuration information; or
determining to report the second information according to the first downlink signal quality.

In some embodiments, determining to report the second information according to the first configuration information includes at least one of:
in a case where it is determined that the first configuration information includes a contention-free random access (CFRA) resource for the terminal device to perform random access, and the CFRA resource includes a first RACH resource supporting reporting of the second information and includes no RACH resource other than the first RACH resource, determining to report the second information;
in a case where it is determined that a random access request transmitted by the terminal device is triggered based on system information (SI), and a RACH resource used for transmitting the SI includes the first RACH resource and includes no RACH resource other than the first RACH resource, determining to report the second information; or
in a case where it is determined that a bandwidth part (BWP) for a random access request transmitted by the terminal device includes the first RACH resource and includes no RACH resource other than the first RACH resource, determining to report the second information.

In some embodiments, the first information includes the first downlink signal quality, and determining, according to the first information, the second information includes:
determining at least one first reporting value according to the first downlink signal quality; and
determining the second information according to the at least one first reporting value.

In some embodiments, determining the at least one first reporting value according to the first downlink signal quality includes:
determining a first mapping value according to the first downlink signal quality and a first association relationship, in which the first association relationship includes a correspondence between different downlink signal qualities and mapping values; and
determining the at least one first reporting value according to the first mapping value and a second mapping value supported by the network device.

In some embodiments, determining the at least one first reporting value according to the first mapping value and the second mapping value supported by the network device includes one of:
taking a second mapping value, among one or more second mapping values, greater than or equal to the first mapping value as the first reporting value; or
taking a second mapping value, among one or more second mapping values, less than or equal to the first mapping value as the first reporting value.

In some embodiments, determining the at least one first reporting value according to the first downlink signal quality includes:
determining third downlink signal quality according to the first downlink signal quality and second downlink signal quality, in which the second downlink signal quality is a downlink signal quality threshold corresponding to a first repetition number, and the first repetition number is a repetition number supported by the network device; and
taking a repetition number corresponding to the third downlink signal quality as the first reporting value.

In some embodiments, determining the third downlink signal quality according to the first downlink signal quality and the second downlink signal quality includes one of:
taking second downlink signal quality, among the one or more second downlink signal qualities, greater than or equal to the first downlink signal quality as the third downlink signal quality; or
taking second downlink signal quality, among the one or more second downlink signal qualities, less than or equal to the first downlink signal quality as the third downlink signal quality.

In some embodiments, determining the second information according to the at least one first reporting value includes:
taking a first reporting value corresponding to a RACH resource set used for transmitting a preamble among the at least one first reporting value as the second information.

In some embodiments, the first information includes the first configuration information, the first configuration information includes a plurality of RACH resource sets, and determining, according to the first information, the second information includes:
determining a first RACH resource set capable of being used for triggering all features for the terminal device to perform random access, in which the first RACH resource set includes at least one RACH resource set from the first configuration information; and
determining the second information according to fourth information corresponding to the first RACH resource set, in which the fourth information includes at least one of RSRP, CQI, or a repetition number.

In some embodiments, determining the second information according to the fourth information corresponding to the first RACH resource set includes:
in a case where it is determined that the first RACH resource set includes one RACH resource set, taking the fourth information corresponding to the first RACH resource set as the second information.

In some embodiments, determining the second information according to the fourth information corresponding to the first RACH resource set includes:
in a case where it is determined that the first RACH resource set includes a plurality of RACH resource sets, determining at least one second RACH resource set from the first RACH resource set according to the first downlink signal quality; and
determining the second information according to fourth information corresponding to the at least one second RACH resource set.

In some embodiments, determining the at least one second RACH resource set from the first RACH resource set according to the first downlink signal quality includes:
determining at least one first reporting value according to the first downlink signal quality;
determining a second reporting value corresponding to each RACH resource set in the first RACH resource set; and
taking a RACH resource set corresponding to a second reporting value falling within the at least one first reporting value among a plurality of second reporting values as the second RACH resource set.

In some embodiments, determining the second information according to the fourth information corresponding to the at least one second RACH resource set includes one of:
taking a minimum value among the fourth information corresponding to the at least one second RACH resource set as the second information; or
taking a maximum value among the fourth information corresponding to the at least one second RACH resource set as the second information.

In some embodiments, the method further includes:
in a case where it is determined that none of the plurality of second reporting values falls within the at least one first reporting value, determining the second information according to the plurality of second reporting values and the at least one first reporting value.

In some embodiments, determining the second information according to the plurality of second reporting values and the at least one first reporting value includes at least one of:
taking a minimum value among one or more third reporting values as the second information, in which the one or more third reporting values include a second reporting value, among the plurality of second reporting values, greater than a fourth reporting value, and the fourth reporting value is a maximum value among the at least one first reporting value; or
taking a maximum value among one or more fifth reporting values as the second information, in which the one or more fifth reporting values include a second reporting value, among the plurality of second reporting values, less than a sixth reporting value, and the sixth reporting value is a minimum value among the at least one first reporting value.

In some embodiments, the method further includes:
in a case where it is determined that all of the plurality of second reporting values are less than the fourth reporting value, taking the maximum value among the one or more fifth reporting values as the second information.

In some embodiments, the method further includes:
in a case where it is determined that all of the plurality of second reporting values are greater than the sixth reporting value, taking the minimum value among the one or more third reporting values as the second information.

In some embodiments, the method further includes:
in a case where it is determined that the plurality of RACH resource sets in the first configuration information are all fifth RACH resource sets, and the fifth RACH resource sets are capable of being used for triggering a part of features for the terminal device to perform random access, and not capable of being used for triggering all features for the terminal device to perform random access, determining a sixth RACH resource set from the fifth RACH resource sets according to priority of the part of features; and
determining the second information according to fourth information corresponding to the sixth RACH resource set.

In some embodiments, determining the second information according to the fourth information corresponding to the sixth RACH resource set includes:
in a case where it is determined that the sixth RACH resource set includes one seventh RACH resource set, taking fourth information corresponding to the seventh RACH resource set as the second information, in which the seventh RACH resource set is a RACH resource set supporting reporting of the second information; or
in a case where it is determined that the sixth RACH resource set includes a plurality of seventh RACH resource sets, determining at least one eighth RACH resource set from the plurality of seventh RACH resource sets according to the first downlink signal quality, and determining the second information according to fourth information corresponding to the at least one eighth RACH resource set.

In some embodiments, the first downlink signal quality includes at least one of: reference signal received power (RSRP) of a downlink pathloss reference point, channel quality indicator (CQI) of a downlink pathloss reference point, RSRP of a physical downlink control channel (PDCCH), or CQI of a PDCCH.

In some embodiments, the second information includes at least one of:
the first downlink signal quality;
a repetition number; or
an indication of whether the terminal device supports repeatedly transmitting the downlink information.

In some embodiments, the downlink information includes at least one of: contention-based random access response information Msg2, contention resolution information Msg4, or non-contention-based random access response information MsgB.

In some embodiments, a bearing mode of the downlink information includes at least one of:
a PDCCH; or
a physical downlink shared channel (PDSCH).

In some embodiments, reporting the second information to the network device includes: reporting the second information to the network device via Msg1 or MsgA.

FIG. 16 is a schematic flowchart of an information reporting method according to an embodiment of the present disclosure. As shown in FIG. 16, the embodiment of the present disclosure relates to an information reporting method, which may be performed by a network device. The method may include the following step:
Step S1601: The second information is obtained.

In some embodiments, the network device may receive the second information reported by the terminal device, but is not limited to this, and the network device may also receive the second information reported by other entities.

For optional implementations of step S1601, reference may be made to optional implementations of step S204 in FIG. 2 and other related parts in the embodiments involving FIG. 2, which are not described in detail here.

In some embodiments, the first downlink signal quality includes at least one of: reference signal received power (RSRP) of a downlink pathloss reference point, channel quality indicator (CQI) of a downlink pathloss reference point, RSRP of a physical downlink control channel (PDCCH), or CQI of a PDCCH.

In some embodiments, the second information includes at least one of:
the first downlink signal quality;
a repetition number; or
an indication of whether the terminal device supports repeatedly transmitting the downlink information.

In some embodiments, the downlink information includes at least one of: contention-based random access response information Msg2, contention resolution information Msg4, or non-contention-based random access response information MsgB.

In some embodiments, a bearing mode of the downlink information includes at least one of:
a PDCCH; or
a physical downlink shared channel (PDSCH).

In some embodiments, receiving the second information reported by the terminal device includes:
receiving the second information reported by the terminal device via Msg1 or MsgA.

FIG. 17 is an interaction diagram of an information reporting method according to an embodiment of the present disclosure. As shown in FIG. 17, the embodiment of the present disclosure relates to an information reporting method, which may be performed by a communication system. The method may include:
Step S1701: The terminal device determines the second information according to the first information.

For optional implementations of step S1701, reference may be made to optional implementations of steps S202 to S203 in FIG. 2, steps S302 to S308 in FIG. 3, steps S402 to S408 in FIG. 4, steps S502 to S508 in FIG. 5, steps S602 to S604 in FIG. 6, steps S702 to S703 in FIG. 7, and other related parts in the embodiments involving FIG. 2, FIG. 3, FIG. 4, FIG. 5, FIG. 6, and FIG. 7, which are not described in detail here.

Step S1702: The terminal device reports the second information to the network device.

For optional implementations of step S1702, reference may be made to optional implementations of step S204 in FIG. 2 and other related parts in the embodiments involving FIG. 2, which are not described in detail here.

In some embodiments, the above method may include the methods described in the embodiments of the above communication system, terminal device, network device, etc., which are not described in detail here.

In some embodiments, the terminal device initiates a random access procedure, and the terminal device determines whether to report Msg2/Msg4/MsgB PDCCH repetition auxiliary information based on RACH configuration and/or downlink signal quality. If reporting, the terminal device determines the reporting value.

In some embodiments, the Msg2/Msg4/MsgB repetition includes: Msg2/Msg4/MsgB PDCCH repetition and/or Msg2/Msg4/MsgB PDSCH repetition.

In some embodiments, the Msg2 or MsgB or Msg4 repetition auxiliary information reporting value may be one or more of the following:
downlink signal quality, such as CQI or downlink reference point RSRP; or
a suggested repetition number.

In some embodiments, the terminal device reports the auxiliary information via Msg1/MsgA, and the terminal device distinguishes the content of the auxiliary information through different RACH resources.

In some embodiments, the terminal device determines one or more Msg2/Msg4/MsgB PDCCH repetition auxiliary information reporting values applicable to this random access based on downlink signal quality.

Embodiment 1: Determining whether to report auxiliary information based on RACH configuration includes at least one of the following:
if a CFRA resource is configured for this random access, and the CFRA resource only includes RACH resources supporting reporting of the auxiliary information;
if the random access is triggered by an SI request, and the RACH resource used for the SI request only includes RACH resources supporting reporting of the auxiliary information; or
if the BWP on which RACH is initiated is configured with only RACH resources supporting reporting of the auxiliary information, it is considered that auxiliary information is reported.

Embodiment 2: The UE determines the content of the auxiliary information reported based on downlink signal quality, including at least one of the following:
the UE determines the RSRP/CQI/repetition number mapping value based on the RSRP/CQI of the downlink pathloss reference point, or the RSRP/CQI of the PDCCH, and the UE uses all mapping values supported by the base station that are greater than or equal to or less than or equal to the mapping value as reporting values; or
the UE compares the RSRP/CQI of the downlink pathloss reference point, or the RSRP/CQI of the PDCCH with the RSRP/CQI thresholds corresponding to each repetition number, and the UE uses all repetition values supported by the base station for which the RSRP/CQI threshold value corresponding to the repetition number is greater than or equal to or less than or equal to the downlink RSRP/CQI measured by the UE as reporting values.

Embodiment 3: If only one RACH resource set may be used for triggering all features of this random access, the UE directly selects the RACH resource set and uses the repetition number/RSRP/CQI corresponding to the RACH resource set as the reporting value.

Embodiment 4: If one or more RACH resource sets may be used for triggering all features of this random access, from these RACH resource sets, select a RACH resource set whose supported repetition number/RSRP/CQI is within the reporting value set selected in Embodiment 2, and whose repetition number/RSRP/CQI value is the highest/lowest as the reporting value.

Embodiment 4.1: If none of the supported repetition numbers/RSRP/CQIs of these RACH resource sets falls within the reporting value set selected in Embodiment 2, handle in at least one of the following ways:
(1) select the minimum value greater than the maximum value of the reporting value set selected in Embodiment 2 from the reporting value sets supported by these RACH resource sets as the reporting value.
   For example, the reporting value set selected in Embodiment 2 is [5, 6, 7, 8], and the reporting value set supported by the RACH resource set is [1, 2, 9, 10], then 9 is selected as the reporting value.
(2) select the maximum value less than the minimum value of the reporting value set selected in Embodiment 2 from the reporting value sets supported by these RACH resource sets as the reporting value.
   For example, the reporting value set selected in Embodiment 2 is [5, 6, 7, 8], and the reporting value set supported by the RACH resource set is [1, 2, 9, 10], then 2 is selected as the reporting value.
(3) preferentially select the minimum value greater than the maximum value of the reporting value set selected in Embodiment 2 from the reporting value sets supported by these RACH resource sets as the reporting value; if not available, then select the maximum value less than the minimum value of the reporting value set selected in Embodiment 2 from the reporting value sets supported by these RACH resource sets as the reporting value.
(4) preferentially select the maximum value less than the minimum value of the reporting value set selected in Embodiment 2 from the reporting value sets supported by these RACH resource sets as the reporting value; if not available, then select the minimum value greater than the maximum value of the reporting value set selected in Embodiment 2 from the reporting value sets supported by these RACH resource sets as the reporting value.

Embodiment 5: If no available RACH resource set may be used for triggering all features of this random access, but may support part of features, the UE selects the resource set with the highest priority among the features supported by the available RACH resource sets according to the feature priority, and operates in at least one of the following ways:
if one or more resource sets are identified, but only one resource set supports reporting of the auxiliary information, use the repetition number/RSRP/CQI corresponding to the RACH resource set as the selected reporting value; or
if multiple resource sets are identified, and multiple resource sets support reporting of the auxiliary information, determine the reporting value according to Embodiment 4.

Embodiment 6: The RACH resource used by the UE to send the preamble is the RACH resource corresponding to the final reporting value determined according to the above ways.

In some embodiments of the present disclosure, a communication system is provided. The communication system may include a terminal device and a network device, in which the terminal device may perform the information reporting method performed by the terminal device in the foregoing embodiments of the present disclosure; and the network device may perform the information reporting method performed by the network device in the foregoing embodiments of the present disclosure.

Embodiments of the present disclosure also provide an apparatus for implementing any of the above methods. For example, an apparatus is provided, which includes units or modules for implementing the steps performed by the terminal device in any of the above methods. For another example, another apparatus is provided, which includes units or modules for implementing the steps performed by the network device (e.g., access network device, core network function node, core network device, etc.) in any of the above methods.

It should be understood that the division of units or modules in the above apparatus is only a division of logical functions, and in actual implementation, they may be fully or partially integrated into one physical entity, or physically separated. In addition, the units or modules in the apparatus may be implemented in the form of a processor calling software: for example, the apparatus includes a processor, the processor is connected to a memory, and the memory stores instructions, and the processor calls the instructions stored in the memory to implement any of the above methods or implement the functions of the units or modules of the apparatus, where the processor is, for example, a general-purpose processor, such as a central processing unit (CPU) or a microprocessor, and the memory is a memory within the apparatus or a memory outside the apparatus. Alternatively, the units or modules in the apparatus may be implemented in the form of hardware circuits, and the functions of some or all of the units or modules may be implemented by designing the hardware circuits, and the hardware circuits may be understood as one or more processors; for example, in an implementation, the hardware circuit is an application-specific integrated circuit (ASIC), which implements the functions of some or all of the units or modules by designing the logical relationships of the components within the circuit; for another example, in another implementation, the hardware circuit may be implemented by a programmable logic device (PLD), taking a field programmable gate array (FPGA) as an example, which may include a large number of logic gate circuits, and configure the connection relationships between the logic gate circuits through a configuration file, implementing the functions of some or all of the units or modules. All units or modules of the above apparatus may be implemented entirely by a processor calling software, or entirely by hardware circuits, or partially by a processor calling software, and the remaining part by hardware circuits.

In embodiments of the present disclosure, the processor is a circuit with signal processing capabilities. In an implementation, the processor may be a circuit with instruction reading and execution capabilities, such as a central processing unit (CPU), a microprocessor, a graphics processing unit (GPU) (which may be understood as a microprocessor), or a digital signal processor (DSP), etc.; in another implementation, the processor may implement a certain function through the logical relationship of a hardware circuit, and the logical relationship of the hardware circuit is fixed or reconfigurable, for example, the processor is a hardware circuit implemented by an application-specific integrated circuit (ASIC) or a programmable logic device (PLD), such as an FPGA. In a reconfigurable hardware circuit, the process by which the processor loads a configuration document to implement the configuration of the hardware circuit may be understood as the process by which the processor loads instructions to implement the functions of some or all of the units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 18 is a schematic block diagram of a terminal device according to an embodiment of the present disclosure. As shown in FIG. 18, the terminal device 101 may include at least one of a first processing module 1801, a first transceiving module 1802, etc. In some embodiments, the first processing module 1801 is configured to determine, according to first information, second information, in which the first information includes at least one of first configuration information or first downlink signal quality, the first configuration information indicates random access channel (RACH) configuration, and the first downlink signal quality is downlink signal quality measured by the terminal device; the second information is used for a network device to repeatedly transmit third information, and the third information indicates downlink information for the terminal device to perform random access; the first transceiving module 1802 is configured to report the second information to the network device. Optionally, the first processing module 1801 may be configured to perform at least one of other steps (e.g., step S201, step S202, step S203, but not limited to this) performed by the terminal device 101 in any of the above methods, which is not described in detail here. Optionally, the first transceiving module 1802 may be configured to perform at least one of the communication steps (e.g., step S204, but not limited to this) such as sending and/or receiving performed by the terminal device 101 in any of the above methods, which is not described in detail here.

In some embodiments, the first processing module may be one module, or may include multiple sub-modules. Optionally, the multiple sub-modules respectively perform all or part of the steps required to be performed by the first processing module. Optionally, the first processing module may be interchanged with a processor.

In some embodiments, the first transceiving module may include a sending module and/or a receiving module, and the sending module and the receiving module may be separate or integrated. Optionally, the first transceiving module may be interchanged with a transceiver.

FIG. 19 is a schematic block diagram of a network device according to an embodiment of the present disclosure. As shown in FIG. 19, the network device 102 may include at least one of a second transceiving module 1901, a second processing module 1902, etc. In some embodiments, the second transceiving module 1901 is configured to receive second information reported by a terminal device, in which the second information is used for the network device to repeatedly transmit third information, and the third information indicates downlink information for the terminal device to perform random access; the second information is determined by the terminal device according to first information, and the first information includes at least one of first configuration information or first downlink signal quality, the first configuration information indicates random access channel (RACH) configuration, and the first downlink signal quality is downlink signal quality measured by the terminal device. Optionally, the second transceiving module 1901 may be configured to perform at least one of the communication steps (e.g., step S204, but not limited to this) such as sending and/or receiving performed by the network device 102 in any of the above methods, which is not described in detail here.

In some embodiments, the second transceiving module may include a sending module and/or a receiving module, and the sending module and the receiving module may be separate or integrated. Optionally, the second transceiving module may be interchanged with a transceiver.

FIG. 20 is a schematic block diagram of a communication device 2000 according to an embodiment of the present disclosure. The communication device 2000 may be a network device (e.g., an access network device, a core network device, etc.), or a terminal (e.g., a user equipment, etc.), or a chip, chip system, or processor that supports the network device in implementing any of the above methods, or a chip, chip system, or processor that supports the terminal device in implementing any of the above methods. The communication device 2000 may be used to implement the methods described in the above method embodiments, and for details, reference may be made to the description in the above method embodiments.

As shown in FIG. 20, the communication device 2000 includes one or more first processors 2001. The first processor 2001 may be a general-purpose processor or a special-purpose processor, such as a baseband processor or a central processor. The baseband processor may be used for processing communication protocols and communication data, and the central processor may be used for controlling a communication device (e.g., a base station, a baseband chip, an IoT device, an IoT device chip, a DU, or a CU, etc.), executing programs, and processing data of the programs. The communication device 2000 is configured to perform any of the above methods.

In some embodiments, the communication device 2000 further includes one or more first memories 2002 for storing instructions. Optionally, all or part of the first memories 2002 may also be located outside the communication device 2000.

In some embodiments, the communication device 2000 further includes one or more transceivers 2003. When the communication device 2000 includes one or more transceivers 2003, the transceiver 2003 performs at least one of the communication steps (e.g., step S204, but not limited to this) such as sending and/or receiving in the above methods, and the first processor 2001 performs at least one of the other steps (e.g., step S201, but not limited to this).

In some embodiments, a transceiver may include a receiver and/or a transmitter, and the receiver and the transmitter may be separate or integrated. Optionally, terms such as transceiver, transceiving unit, transceiver circuit, etc., may be interchanged, terms such as transmitter, transmitting unit, transmitter circuit, etc., may be interchanged, and terms such as receiver, receiving unit, receiver circuit, etc., may be interchanged.

In some embodiments, the communication device 2000 may include one or more interface circuits. Optionally, the interface circuit is connected to the first memory 2002, and the interface circuit may be used for receiving signals from the first memory 2002 or other devices, and may be used for sending signals to the first memory 2002 or other devices. For example, the interface circuit may read instructions stored in the first memory 2002 and send the instructions to the first processor 2001.

The communication device 2000 described in the above embodiments may be a network device or an IoT device, but the scope of the communication device 2000 described in the present disclosure is not limited to this, and the structure of the communication device 2000 may not be limited by FIG. 20. The communication device may be an independent device or may be a part of a larger device. For example, the communication device may be: (1) an independent integrated circuit IC, or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, an IoT device, a smart IoT device, a cellular phone, a wireless device, a handset, a mobile unit, a vehicle-mounted device, a first device, a cloud device, an artificial intelligence device, etc.; (6) other devices, etc.

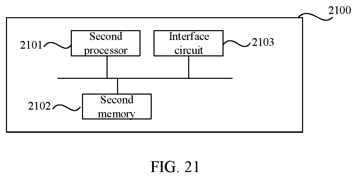

FIG. 21 is a schematic block diagram of a chip 2100 according to an embodiment of the present disclosure. For the case where the communication device 2000 is a chip or a chip system, reference may be made to the schematic structural diagram of the chip 2100 shown in FIG. 21, but is not limited to this.

The chip 2100 includes one or more second processors 2101, and the chip 2100 is configured to perform any of the above methods.

In some embodiments, the chip 2100 further includes one or more interface circuits 2103. Optionally, the interface circuit 2103 is connected to the second memory 2102, and the interface circuit 2103 may be used for receiving signals from the second memory 2102 or other devices, and the interface circuit 2103 may be used for sending signals to the second memory 2102 or other devices. For example, the interface circuit 2103 may read instructions stored in the second memory 2102 and send the instructions to the second processor 2101.

In some embodiments, the interface circuit 2103 performs at least one of the communication steps (e.g., step S204, but not limited to this) such as sending and/or receiving in the above methods, and the second processor 2101 performs at least one of the other steps (e.g., step S201, but not limited to this).

In some embodiments, terms such as interface circuit, interface, transceiver pin, transceiver, etc., may be interchanged.

In some embodiments, the chip 2100 further includes one or more second memories 2102 for storing instructions. Optionally, all or part of the second memories 2102 may be located outside the chip 2100.

Embodiments of the present disclosure also provide a storage medium, storing instructions that, when executed on the communication device 2000, cause the communication device 2000 to perform any of the above methods. Optionally, the storage medium is an electronic storage medium. Optionally, the storage medium is a computer-readable storage medium, but is not limited to this, and may also be a storage medium readable by other devices. Optionally, the storage medium may be a non-transitory storage medium, but is not limited to this, and may also be a transitory storage medium.

Embodiments of the present disclosure also provide a program product that, when executed by the communication device 2000, causes the communication device 2000 to perform any of the above methods. Optionally, the program product may be a computer program product.

Embodiments of the present disclosure also provide a computer program that, when executed on a computer, causes the computer to perform any of the above methods.

## Claims

1. An information reporting method, performed by a terminal device, comprising:
determining, according to first information, second information, wherein the first information comprises at least one of first configuration information or first downlink signal quality, the first configuration information indicates random access channel (RACH) configuration, and the first downlink signal quality is downlink signal quality measured by the terminal device; the second information is used for a network device to repeatedly transmit third information, and the third information indicates downlink information for the terminal device to perform random access; and
reporting the second information to the network device.

2. The method according to claim 1, further comprising:
determining to report the second information.

3. The method according to claim 2, wherein determining to report the second information comprises at least one of:
determining to report the second information according to the first configuration information; or
determining to report the second information according to the first downlink signal quality.

4. The method according to claim 3, wherein determining to report the second information according to the first configuration information comprises at least one of:
in a case where it is determined that the first configuration information comprises a contention-free random access (CFRA) resource for the terminal device to perform random access, and the CFRA resource comprises a first RACH resource supporting reporting of the second information and comprises no RACH resource other than the first RACH resource, determining to report the second information;
in a case where it is determined that a random access request transmitted by the terminal device is triggered by system information (SI), and a RACH resource used for transmitting the SI comprises the first RACH resource and comprises no RACH resource other than the first RACH resource, determining to report the second information; or
in a case where it is determined that a bandwidth part (BWP) for a random access request transmitted by the terminal device comprises the first RACH resource and comprises no RACH resource other than the first RACH resource, determining to report the second information.

5. The method according to claim 1, wherein the first information comprises the first downlink signal quality, and determining, according to the first information, the second information comprises:
determining at least one first reporting value according to the first downlink signal quality; and
determining the second information according to the at least one first reporting value.

6. The method according to claim 5, wherein determining the at least one first reporting value according to the first downlink signal quality comprises:
determining a first mapping value according to the first downlink signal quality and a first association relationship, wherein the first association relationship comprises a correspondence between different downlink signal qualities and mapping values; and
determining the at least one first reporting value according to the first mapping value and a second mapping value supported by the network device.

7. The method according to claim 6, wherein determining the at least one first reporting value according to the first mapping value and the second mapping value supported by the network device comprises one of:
taking a second mapping value, among one or more second mapping values, greater than or equal to the first mapping value as the first reporting value; or
taking a second mapping value, among one or more second mapping values, less than or equal to the first mapping value as the first reporting value.

8. The method according to claim 5, wherein determining the at least one first reporting value according to the first downlink signal quality comprises:
determining, according to the first downlink signal quality and second downlink signal quality, third downlink signal quality, wherein the second downlink signal quality is a downlink signal quality threshold corresponding to a first repetition number, and the first repetition number is a repetition number supported by the network device; and
taking a repetition number corresponding to the third downlink signal quality as the first reporting value.

9. The method according to claim 8, wherein determining, according to the first downlink signal quality and the second downlink signal quality, the third downlink signal quality comprises one of:
taking second downlink signal quality, among one or more second downlink signal qualities, greater than or equal to the first downlink signal quality as the third downlink signal quality; or
taking second downlink signal quality, among one or more second downlink signal qualities, less than or equal to the first downlink signal quality as the third downlink signal quality.

10. The method according to claim 5, wherein determining the second information according to the at least one first reporting value comprises:
taking a first reporting value corresponding to a RACH resource set used for transmitting a preamble among the at least one first reporting value as the second information.

11. The method according to claim 1, wherein the first information comprises the first configuration information, the first configuration information comprises a plurality of RACH resource sets, and determining, according to first information, the second information comprises:
determining a first RACH resource set capable of being used for triggering all features for the terminal device to perform random access, wherein the first RACH resource set comprises at least one RACH resource set from the first configuration information; and
determining the second information according to fourth information corresponding to the first RACH resource set, wherein the fourth information comprises at least one of reference signal received power (RSRP), channel quality indicator (CQI), or a repetition number.

12. The method according to claim 11, wherein determining the second information according to fourth information corresponding to the first RACH resource set comprises:
in a case where it is determined that the first RACH resource set comprises one RACH resource set, taking the fourth information corresponding to the first RACH resource set as the second information.

13. The method according to claim 11, wherein determining the second information according to the fourth information corresponding to the first RACH resource set comprises:
in a case where it is determined that the first RACH resource set comprises a plurality of RACH resource sets, determining at least one second RACH resource set from the first RACH resource set according to the first downlink signal quality; and
determining the second information according to fourth information corresponding to the at least one second RACH resource set.

14. The method according to claim 13, wherein determining the at least one second RACH resource set from the first RACH resource set according to the first downlink signal quality comprises:
determining at least one first reporting value according to the first downlink signal quality;
determining a second reporting value corresponding to each RACH resource set in the first RACH resource set; and
taking a RACH resource set corresponding to a second reporting value falling within the at least one first reporting value among a plurality of second reporting values as the second RACH resource set.

15. The method according to claim 13 or 14, wherein determining the second information according to the fourth information corresponding to the at least one second RACH resource set comprises one of:
taking a minimum value among the fourth information corresponding to the at least one second RACH resource set as the second information; or
taking a maximum value among the fourth information corresponding to the at least one second RACH resource set as the second information.

16. The method according to claim 14, further comprising:
in a case where it is determined that none of the plurality of second reporting values falls within the at least one first reporting value, determining the second information according to the plurality of second reporting values and the at least one first reporting value.

17. The method according to claim 16, wherein determining the second information according to the plurality of second reporting values and the at least one first reporting value comprises at least one of:
taking a minimum value among one or more third reporting values as the second information, wherein the one or more third reporting values comprise a second reporting value, among the plurality of second reporting values, greater than a fourth reporting value, and the fourth reporting value is a maximum value among the at least one first reporting value; or
taking a maximum value among one or more fifth reporting values as the second information, wherein the one or more fifth reporting values comprise a second reporting value, among the plurality of second reporting value, less than a sixth reporting value, and the sixth reporting value is a minimum value among the at least one first reporting value.

18. The method according to claim 17, further comprising:
in a case where it is determined that all of the plurality of second reporting values are less than the fourth reporting value, taking the maximum value among the one or more fifth reporting values as the second information.

19. The method according to claim 17, further comprising:
in a case where it is determined that all of the plurality of second reporting values are greater than the sixth reporting value, taking the minimum value among the one or more third reporting values as the second information.

20. The method according to claim 11, further comprising:
in a case where it is determined that the plurality of RACH resource sets in the first configuration information are all fifth RACH resource sets, and the fifth RACH resource sets are capable of being used for triggering a part of features for the terminal device to perform random access and not capable of being used for triggering all features for the terminal device to perform random access, determining a sixth RACH resource set from the fifth RACH resource sets according to priority of the part of features; and
determining the second information according to fourth information corresponding to the sixth RACH resource set.

21. The method according to claim 20, wherein determining the second information according to the fourth information corresponding to the sixth RACH resource set comprises:
in a case where it is determined that the sixth RACH resource set comprises one seventh RACH resource set, taking fourth information corresponding to the seventh RACH resource set as the second information, wherein the seventh RACH resource set is a RACH resource set supporting reporting of the second information; or
in a case where it is determined that the sixth RACH resource set comprises a plurality of seventh RACH resource sets, determining at least one eighth RACH resource set from the plurality of seventh RACH resource sets according to the first downlink signal quality, and determining the second information according to fourth information corresponding to the at least one eighth RACH resource set.

22. The method according to claim 1, wherein the first downlink signal quality comprises at least one of RSRP of a downlink pathloss reference point, CQI of a downlink pathloss reference point, RSRP of a physical downlink control channel (PDCCH), or CQI of a PDCCH.

23. The method according to claim 1, wherein the second information comprises at least one of the first downlink signal quality, a repetition number, or an indication of whether the terminal device supports repeatedly transmitting the downlink information.

24. The method according to claim 1, wherein the downlink information comprises at least one of contention-based random access response information Msg2, contention resolution information Msg4, or non-contention-based random access response information MsgB.

25. The method according to claim 24, wherein a bearing mode of the downlink information comprises at least one of a PDCCH, or a physical downlink shared channel (PDSCH).

26. The method according to claim 1, wherein reporting the second information to the network device comprises:
reporting the second information to the network device via contention-based random access request information Msg1 or non-contention-based random access request information MsgA.

27. An information reporting method, performed by a network device, comprising:
receiving second information reported by a terminal device, wherein the second information is used for the network device to repeatedly transmit third information, and the third information indicates downlink information for the terminal device to perform random access; the second information is determined by the terminal device according to first information, the first information comprises at least one of first configuration information or first downlink signal quality, the first configuration information indicates random access channel (RACH) configuration, and the first downlink signal quality is downlink signal quality measured by the terminal device.

28. The method according to claim 27, wherein the first downlink signal quality comprises at least one of RSRP of a downlink path loss reference point, CQI of a downlink path loss reference point, RSRP of a physical downlink control channel (PDCCH), or CQI of a PDCCH.

29. The method according to claim 27 or 28, wherein the second information comprises at least one of the first downlink signal quality, a repetition number, or an indication of whether the terminal device supports repeatedly transmitting the downlink information.

30. The method according to claim 27, wherein the downlink information comprises at least one of contention-based random access response information Msg2, contention resolution information Msg4, or non-contention-based random access response information MsgB.

31. The method according to claim 30, wherein a bearing mode of the downlink information comprises at least one of a PDCCH, or a physical downlink shared channel (PDSCH).

32. The method according to claim 27, wherein receiving the second information reported by the terminal device comprises:
receiving the second information transmitted by the terminal device via contention-based random access request information Msg1 or non-contention-based random access request information MsgA.

33. A terminal device, comprising:
a first processing module configured to determine, according to first information, second information, wherein the first information comprises at least one of first configuration information or first downlink signal quality, the first configuration information indicates random access channel (RACH) configuration, and the first downlink signal quality is downlink signal quality measured by the terminal device; the second information is used for a network device to repeatedly transmit third information, and the third information indicates downlink information for the terminal device to perform random access; and
a first transceiving module configured to report the second information to the network device.

34. A network device, comprising:
a second transceiving module configured to receive second information reported by a terminal device, wherein the second information is used for the network device to repeatedly transmit third information, the third information indicates downlink information for the terminal device to perform random access; the second information is determined by the terminal device according to first information, the first information comprises at least one of first configuration information or first downlink signal quality, the first configuration information indicates random access channel (RACH) configuration, and the first downlink signal quality is downlink signal quality measured by the terminal device.

35. A communication device, comprising:
one or more processors,
wherein the communication device is configured to perform the information reporting method according to any one of claims 1 to 26 or any one of claims 27 to 32.

36. A communication system, comprising a terminal device and a network device, wherein the terminal device is configured to perform the information reporting method according to any one of claims 1 to 26; and the network device is configured to perform the information reporting method according to any one of claims 27 to 32.

37. A storage medium storing instructions that, when executed on a communication device, cause the communication device to perform the information reporting method according to any one of claims 1 to 26 or any one of claims 27 to 32.
